(19) Europäisches Patentamt
European Patent Office
Office européen des brevets

(11) **EP 4 488 736 A1**

(12) **EUROPEAN PATENT APPLICATION**

(43) Date of publication:
**08.01.2025   Bulletin 2025/02**

(21) Application number: **24184767.2**

(22) Date of filing: **26.06.2024**

(51) International Patent Classification (IPC):
**G02B 7/02** *(2021.01)*

(52) Cooperative Patent Classification (CPC):
**G02B 7/022; G02B 7/021**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.06.2023   US 202363510923 P
15.12.2023   TW 112149072**

(71) Applicant: **LARGAN PRECISION CO., LTD.
Taichung City 408 (TW)**

(72) Inventors:
• **Huang, Hsuan-Chin
Taichung City 408 (TW)**
• **Lai, Yu-Chen
Taichung City 408 (TW)**
• **Chang, Pei-Chi
Taichung City 408 (TW)**
• **Chou, Ming-Ta
Taichung City 408 (TW)**

(74) Representative: **Jakelski & Althoff
Patentanwälte PartG mbB
Patentanwälte
Partnerschaftsgesellschaft
Mollenbachstraße 37
71229 Leonberg (DE)**

(54) **GLASS LENS ELEMENT, HYBRID LENS ELEMENT, IMAGING LENS ASSEMBLY, IMAGE CAPTURING APPARATUS AND ELECTRONIC DEVICE**

(57)    A glass lens element includes an optical portion and a peripheral portion. The peripheral portion is away from an optical axis from the optical portion, and the peripheral portion includes a cylindrical surface, a first arc surface, a brim surface and a connecting surface. The first arc surface is connected to the cylindrical surface, and the first arc surface extends from the cylindrical surface. The brim surface and the first arc surface are disposed relatively to the cylindrical surface, and the brim surface extends and protrudes from the cylindrical surface towards a direction away from the first arc surface. The connecting surface is gradually close to the optical axis from the first arc surface towards a direction away from the brim surface, and the connecting surface is connected to the optical portion. The peripheral portion is smooth connected from the first arc surface towards the brim surface.

Fig. 1B

EP 4 488 736 A1

## Description

### BACKGROUND

Technical Field

The present disclosure relates to a glass lens element, a hybrid lens element, an imaging lens assembly and an image capturing apparatus. More particularly, the present disclosure relates to a glass lens element, a hybrid lens element, an imaging lens assembly and an image capturing apparatus applicable to portable electronic devices.

Description of Related Art

In recent years, portable electronic devices have developed rapidly. For example, intelligent electronic devices and tablets have been filled in the lives of modern people, and image capturing apparatuses, imaging lens assemblies, glass lens elements and hybrid lens elements thereof mounted on portable electronic devices have also prospered. However, as technology advances, the quality requirements of the glass lens element and the hybrid lens element are becoming higher and higher. Therefore, a glass lens element and a hybrid lens element, which can reduce the assembling tolerance and ensure the optical quality, needs to be developed.

### SUMMARY

According to one aspect of the present disclosure, a glass lens element has an optical axis, and includes an optical portion and a peripheral portion. The optical axis passes through the optical portion. The peripheral portion is away from the optical axis from the optical portion, and the peripheral portion includes a cylindrical surface, a first arc surface, a brim surface and a connecting surface. The cylindrical surface is configured to define an outer diameter of the glass lens element, and the cylindrical surface extends along the optical axis. The first arc surface is connected to the cylindrical surface, and the first arc surface extends from the cylindrical surface towards a direction close to the optical axis. The brim surface and the first arc surface are disposed relatively to the cylindrical surface, and the brim surface extends and protrudes from the cylindrical surface towards a direction away from the first arc surface. The connecting surface is gradually close to the optical axis from the first arc surface towards a direction away from the brim surface, and the connecting surface is connected to the optical portion. The peripheral portion is smooth connected from the first arc surface towards the brim surface. When on a cross section parallel to and passing through the optical axis, a radius of curvature of the first arc surface is R, and a length of the cylindrical surface is L, the following condition is satisfied: $0.01 \leq R/L \leq 9.85$.

According to the glass lens element of the aforementioned aspect, wherein on a direction vertical to the optical axis, a maximum distance between the brim surface and the cylindrical surface is Pmax, and the following condition is satisfied: $0.02 \text{ mm} \leq Pmax \leq 1.0 \text{ mm}$.

According to the glass lens element of the aforementioned aspect, wherein the peripheral portion further includes an arc end formed on a side of the brim surface away from the first arc surface, a radius of curvature of the arc end is Rp, and the following condition is satisfied: $0.02 \text{ mm} \leq Rp \leq 0.5 \text{ mm}$.

According to the glass lens element of the aforementioned aspect, wherein the connecting surface includes a second arc surface near to a side of the first arc surface away from the cylindrical surface, and the second arc surface extends from the first arc surface towards the direction close to the optical axis. When on the cross section parallel to and passing through the optical axis, a distance between a side of the first arc surface close to the cylindrical surface and a side of the second arc surface away from the cylindrical surface is C, and the following condition is satisfied: $0.05 \text{ mm} \leq C \leq 1.13 \text{ mm}$.

According to the glass lens element of the aforementioned aspect, further includes a low-reflecting surface, wherein the connecting surface further includes a transition surface smooth connected to the first arc surface and the second arc surface, and the low-reflecting surface is disposed on the transition surface.

According to the glass lens element of the aforementioned aspect, further includes a first platform surface vertical to the cylindrical surface, wherein on the cross section parallel to and passing through the optical axis, the length of the cylindrical surface is L; on a direction vertical to the optical axis, a width of the first platform surface is W1, and the following condition is satisfied: $0.14 \leq L/W1 \leq 3.8$.

According to the glass lens element of the aforementioned aspect, further includes a second platform surface disposed relatively to the first platform surface, wherein the first platform surface is parallel to the second platform surface, and a parallelism between the first platform surface and the second platform surface is not larger than 0.05 mm.

According to the glass lens element of the aforementioned aspect, further includes a frustum surface disposed on a side of the brim surface away from the cylindrical surface, the frustum surface extends towards a direction away from the brim surface and close to the optical axis, wherein on the cross section parallel to and passing through the optical axis, an angle between the frustum surface and the cylindrical surface is DOC, and the following condition is satisfied: 10 degrees ≤ DOC ≤ 60 degrees.

According to the glass lens element of the aforementioned aspect, further includes a low-reflecting surface disposed on at least one of the cylindrical surface, the first arc surface and the brim surface.

According to the glass lens element of the aforementioned aspect, wherein on the cross section parallel to and passing through the optical axis, the length of the cylindrical surface is L, and the following condition is satisfied: 0.03 mm ≤ L.

According to the glass lens element of the aforementioned aspect, wherein on a cross section vertical to the optical axis and passing through the cylindrical surface, a roundness of the cylindrical surface is not larger than Ø0.05 mm.

According to one aspect of the present disclosure, an imaging lens assembly includes the glass lens element of the aforementioned aspect, at least one optical element and a lens carrier. The optical element is disposed along the optical axis of the glass lens element. The glass lens element and the optical element are disposed on the lens carrier.

According to the imaging lens assembly of the aforementioned aspect, wherein the lens carrier is directly contacted with the cylindrical surface of the glass lens element, the lens carrier includes a brim surface corresponding structure, the brim surface corresponding structure and the brim surface of the glass lens element are relatively disposed, and a gap is formed between the brim surface and the brim surface corresponding structure.

According to the imaging lens assembly of the aforementioned aspect, wherein the optical element includes a brim surface corresponding structure, the brim surface corresponding structure and the brim surface of the glass lens element are relatively disposed, and a gap is formed between the brim surface and the brim surface corresponding structure.

According to the imaging lens assembly of the aforementioned aspect, wherein the glass lens element further includes a first platform surface, one of the lens carrier and the optical element is directly contacted with the first platform surface, on a direction vertical to the optical axis, a width of the first platform surface is W1, and the following condition is satisfied: 0.04 mm ≤ W1 ≤ 1.7 mm.

According to the imaging lens assembly of the aforementioned aspect, wherein the optical element includes an adjacent lens element, the glass lens element further includes a frustum surface, the frustum surface is directly contacted with the adjacent lens element, on the cross section parallel to and passing through the optical axis, an angle between the frustum surface and the cylindrical surface is DOC, and the following condition is satisfied: 10 degrees ≤ DOC ≤ 60 degrees.

According to one aspect of the present disclosure, an image capturing apparatus includes the imaging lens assembly of the aforementioned aspect.

According to one aspect of the present disclosure, an electronic device includes the image capturing apparatus of the aforementioned aspect.

According to one aspect of the present disclosure, a hybrid lens element includes a glass main body and a plastic frame. The glass main body has an optical axis, and includes an optical portion and a peripheral portion. The optical axis passes through the optical portion. The peripheral portion is away from the optical axis from the optical portion, and the peripheral portion includes a cylindrical surface, a first arc surface, a brim surface and a connecting surface. The cylindrical surface is configured to define an outer diameter of the glass main body, and the cylindrical surface extends along a direction parallel to the optical axis. The first arc surface is connected to the cylindrical surface, and the first arc surface extends from the cylindrical surface towards a direction close to the optical axis. The brim surface and the first arc surface are disposed relatively to the cylindrical surface, and the brim surface extends and protrudes from the cylindrical surface towards a direction away from the first arc surface. The connecting surface is gradually close to the optical axis from the first arc surface towards a direction away from the brim surface, and the connecting surface is connected to the optical portion. The plastic frame includes an outer annular portion, a first extending portion and a second extending portion. The outer annular portion surrounds and is adjacent to the cylindrical surface. The first extending portion and the second extending portion extend from the outer annular portion towards two sides of the cylindrical surface in a direction away from the outer annular portion, a first tip and a second tip are formed on a surface of the glass main body, respectively, and the first tip is closer to the optical axis than the second tip to the optical axis. When on a cross section parallel to and passing through the optical axis, an angle of the first tip is T1, and the following condition is satisfied: 5 degrees ≤ T1 ≤ 121 degrees.

According to the hybrid lens element of the aforementioned aspect, wherein the plastic frame is made of opaque plastic material.

According to the hybrid lens element of the aforementioned aspect, wherein on the cross section parallel to and passing through the optical axis, a radius of curvature of the first arc surface is R, a length of the cylindrical surface is L, and the following condition is satisfied: 0.11 ≤ R/L ≤ 6.65.

According to the hybrid lens element of the aforementioned aspect, wherein on the cross section parallel to and passing through the optical axis, the radius of curvature of the first arc surface is R, the length of the cylindrical surface is L, and the following condition is satisfied: 0.23 ≤ R/L ≤ 3.3.

According to the hybrid lens element of the aforementioned aspect, wherein the peripheral portion further includes an arc end formed on a side of the brim surface away from the first arc surface, a radius of curvature of the arc end is Rp, and the following condition is satisfied: 0.01 mm $\leq$ Rp $\leq$ 1.0 mm.

According to the hybrid lens element of the aforementioned aspect, wherein the radius of curvature of the arc end is Rp, and the following condition is satisfied: 0.02 mm $\leq$ Rp $\leq$ 0.5 mm.

According to the hybrid lens element of the aforementioned aspect, wherein the connecting surface includes a second arc surface near to a side of the first arc surface away from the cylindrical surface, the second arc surface extends from the first arc surface towards the direction close to the optical axis, and the plastic frame is simultaneously and directly contacted with the first arc surface and the second arc surface. When on the cross section parallel to and passing through the optical axis, a distance between a side of the first arc surface close to the cylindrical surface and a side of the second arc surface away from the cylindrical surface is C, and the following condition is satisfied:

$$0.05 \text{ mm} \leq C \leq 1.13 \text{ mm.}$$

According to the hybrid lens element of the aforementioned aspect, wherein on the cross section parallel to and passing through the optical axis, the distance between the side of the first arc surface close to the cylindrical surface and the side of the second arc surface away from the cylindrical surface is C, and the following condition is satisfied: 0.1 mm $\leq$ C $\leq$ 0.68 mm.

According to the hybrid lens element of the aforementioned aspect, wherein the connecting surface further includes a transition surface smooth connected to the first arc surface and the second arc surface.

According to the hybrid lens element of the aforementioned aspect, wherein the plastic frame further includes an intermediate surface directly contacted with the glass main body, on a direction vertical to the optical axis, a width of the intermediate surface is Win, and the following condition is satisfied:

$$0.03 \text{ mm} \leq \text{Win} \leq 3.5 \text{ mm.}$$

According to the hybrid lens element of the aforementioned aspect, wherein on the direction vertical to the optical axis, the width of the intermediate surface is Win, and the following condition is satisfied: 0.06 mm $\leq$ Win $\leq$ 1.7 mm.

According to the hybrid lens element of the aforementioned aspect, wherein the peripheral portion further includes a first platform surface vertical to the cylindrical surface, the first platform surface is disposed on a side corresponding to the second tip, and the first platform surface is closer to the optical axis than the second tip to the optical axis. When a distance between the first platform surface and the second tip on the direction parallel to the optical axis is S, and the following condition is satisfied: 0.02 mm $\leq$ S $\leq$ 0.15 mm.

According to the hybrid lens element of the aforementioned aspect, wherein the plastic frame further includes a plastic platform surface, the plastic platform surface is relative to the first platform surface, the first platform surface is parallel to the plastic platform surface, and a parallelism between the first platform surface and the plastic platform surface is not larger than 0.05 mm.

According to the hybrid lens element of the aforementioned aspect, further includes an anti-reflecting layer disposed on the glass main body and the plastic frame.

According to one aspect of the present disclosure, an imaging lens assembly includes the hybrid lens element of the aforementioned aspect, at least one optical element and a lens carrier. The optical element is disposed along the optical axis of the glass main body. The hybrid lens element and the optical element are disposed on the lens carrier.

According to the imaging lens assembly of the aforementioned aspect, wherein the plastic frame further includes a disposing structure, and at least one of the optical element and the lens carrier is disposed on the disposing structure.

According to the imaging lens assembly of the aforementioned aspect, wherein the optical element includes an adjacent lens element, the glass main body of the hybrid lens element includes a frustum surface, the frustum surface is directly contacted with the adjacent lens element, on the cross section parallel to and passing through the optical axis, an angle between the frustum surface and the cylindrical surface is DOC, and the following condition is satisfied: 10 degrees $\leq$ DOC $\leq$ 60 degrees.

According to the imaging lens assembly of the aforementioned aspect, wherein the glass main body further includes a first platform surface, one of the lens carrier and the optical element is directly contacted with the first platform surface, on a direction vertical to the optical axis, a width of the first platform surface is W1, and the following condition is satisfied: 0.04 mm $\leq$ W1 $\leq$ 1.7 mm.

According to the imaging lens assembly of the aforementioned aspect, wherein on the cross section parallel to and passing through the optical axis, the angle of the first tip is T1, and the following condition is satisfied: 17 degrees $\leq$ T1 $\leq$ 106 degrees.

According to the imaging lens assembly of the aforementioned aspect, wherein on the cross section parallel to and passing through the optical axis, an angle of the second tip is T2, and the following condition is satisfied: 17 degrees $\leq$

T2 ≤ 106 degrees.

According to one aspect of the present disclosure, an image capturing apparatus includes the imaging lens assembly of the aforementioned aspect.

According to one aspect of the present disclosure, an electronic device includes the image capturing apparatus of the aforementioned aspect.

**BRIEF DESCRIPTION OF THE DRAWINGS**

Fig. 1A is a three-dimensional view of an image capturing apparatus according to the 1st example of the present disclosure.

Fig. 1B is a partial cross-sectional view of the image capturing apparatus according to the 1st example in Fig. 1A.

Fig. 1C is an exploded view of an imaging lens assembly according to the 1st example in Fig. 1A.

Fig. 1D is a schematic view of the image capturing apparatus according to the 1st example in Fig. 1A.

Fig. 1E is a partial enlarged view of the image capturing apparatus according to the 1st example in Fig. 1D.

Fig. 1F is a schematic view of the first lens element according to the 1st example in Fig. 1D.

Fig. 1G is a partial enlarged view of the first lens element according to the 1st example in Fig. 1F.

Fig. 2A is a three-dimensional view of an image capturing apparatus according to the 2nd example of the present disclosure.

Fig. 2B is a partial cross-sectional view of the image capturing apparatus according to the 2nd example in Fig. 2A.

Fig. 2C is an exploded view of the imaging lens assembly according to the 2nd example in Fig. 2A.

Fig. 2D is a schematic view of the image capturing apparatus according to the 2nd example in Fig. 2A.

Fig. 2E is a schematic view of the first lens element according to the 2nd example in Fig. 2D.

Fig. 2F is a partial enlarged view of the first lens element according to the 2nd example in Fig. 2E.

Fig. 3A is a three-dimensional view of an image capturing apparatus according to the 3rd example of the present disclosure.

Fig. 3B is a partial cross-sectional view of the image capturing apparatus according to the 3rd example in Fig. 3A.

Fig. 3C is a schematic view of the image capturing apparatus according to the 3rd example in Fig. 3A.

Fig. 3D is a schematic view of the first lens element according to the 3rd example in Fig. 3C.

Fig. 3E is a partial enlarged view of the first lens element according to the 3rd example in Fig. 3D.

Fig. 3F is a schematic view of the parameters of the first lens element according to the 3rd example in Fig. 3D.

Fig. 4A is a three-dimensional view of an image capturing apparatus according to the 4th example of the present disclosure.

Fig. 4B is a partial cross-sectional view of the image capturing apparatus according to the 4th example in Fig. 4A.

Fig. 4C is a partial enlarged view of the image capturing apparatus according to the 4th example in Fig. 4B.

**EP 4 488 736 A1**

Fig. 4D is an exploded view of an imaging lens assembly according to the 4th example in Fig. 4A.

Fig. 4E is an exploded view of a first lens group according to the 4th example in Fig. 4A.

Fig. 4F is an exploded view of a second lens group according to the 4th example in Fig. 4A.

Fig. 4G is a schematic view of the image capturing apparatus according to the 4th example in Fig. 4A.

Fig. 4H is a schematic view of the first lens element according to the 4th example in Fig. 4G.

Fig. 4I is a partial enlarged view of the first lens element according to the 4th example in Fig. 4H.

Fig. 5A is a three-dimensional view of an image capturing apparatus according to the 5th example of the present disclosure.

Fig. 5B is a partial cross-sectional view of the image capturing apparatus according to the 5th example in Fig. 5A.

Fig. 5C is a partial exploded view of the image capturing apparatus according to the 5th example in Fig. 5B.

Fig. 5D is an exploded view of an imaging lens assembly according to the 5th example in Fig. 5A.

Fig. 5E is an exploded view of a first lens group according to the 5th example in Fig. 5A.

Fig. 5F is an exploded view of a second lens group according to the 5th example in Fig. 5A.

Fig. 5G is a schematic view of the image capturing apparatus according to the 5th example in Fig. 5A.

Fig. 5H is a schematic view of the first lens element according to the 5th example in Fig. 5G.

Fig. 5I is a partial enlarged view of the first lens element according to the 5th example in Fig. 5H.

Fig. 6A is a three-dimensional view of an image capturing apparatus according to the 6th example of the present disclosure.

Fig. 6B is a partial cross-sectional view of the image capturing apparatus according to the 6th example in Fig. 6A.

Fig. 6C is a partial enlarged view of the image capturing apparatus according to the 6th example in Fig. 6B.

Fig. 6D is an exploded view of an imaging lens assembly according to the 6th example in Fig. 6A.

Fig. 6E is a schematic view of the image capturing apparatus according to the 6th example in Fig. 6A.

Fig. 6F is a three-dimensional view of the first lens element according to the 6th example in Fig. 6A.

Fig. 6G is a schematic view of the first lens element according to the 6th example in Fig. 6F.

Fig. 6H is a partial enlarged view of the first lens element according to the 6th example in Fig. 6G.

Fig. 7A is a three-dimensional view of an electronic device according to the 7th example of the present disclosure.

Fig. 7B is a perspective view of the electronic device according to the 7th example in Fig. 7A.

Fig. 8 is a schematic view of an electronic device applied to a motorcycle according to the 8th example of the present disclosure.

Fig. 9 is a schematic view of an electronic device applied to a drone according to the 9th example of the present disclosure.

Fig. 10 is a schematic view of an electronic device applied to a car according to the 10th example of the present disclosure.

**DETAILED DESCRIPTION**

The present disclosure provides a glass lens element, which has an optical axis, and includes an optical portion and a peripheral portion, wherein the optical axis passes through the optical portion, and the peripheral portion is away from the optical axis from the optical portion. The peripheral portion includes a cylindrical surface, a first arc surface, a brim surface and a connecting surface. The cylindrical surface is configured to define an outer diameter of the glass lens element, and the cylindrical surface extends along the optical axis. The first arc surface is connected to the cylindrical surface, and the first arc surface extends from the cylindrical surface towards a direction close to the optical axis. The brim surface and the first arc surface are disposed relatively to the cylindrical surface, the brim surface extends and protrudes from the cylindrical surface towards a direction away from the first arc surface, and the peripheral portion is smooth connected from the first arc surface towards the brim surface. The connecting surface is gradually close to the optical axis from the first arc surface towards a direction away from the brim surface, and the connecting surface is connected to the optical portion. When on a cross section parallel to and passing through the optical axis, a radius of curvature of the first arc surface is R, and a length of the cylindrical surface is L, the following condition is satisfied: $0.01 \leq R/L \leq 9.85$.

The flow direction of the glass can be controlled by the connecting surface continuously close to the optical axis from the brim surface towards the first arc surface, so that the defect can be avoided. By the first arc surface and the brim surface relative to the cylindrical surface and the peripheral portion smooth connected from the first arc surface towards the brim surface, the optimization effect of the quality of the cylindrical surface can be ensured. By the aforementioned value range of R/L, the cooperation effect between the first arc surface and the brim surface can be further ensured.

In particular, the outer diameter of the glass lens element defined via the cylindrical surface means that the diameter dimension, which is the measurement, the disposition and the control of the glass lens element, rather than the maximum range of the diameter. Moreover, the glass lens element generally refers to the lens element mainly made of the mineral, and the mineral can be the glass material as silicon oxide, aluminum oxide, potassium oxide, sodium oxide and boron oxide, and the metal material, the nonmetal material and the polymer material can be further added in the glass material, so that the glass lens element can have the function as the anti-ultraviolet light, the anti-infrared light and the reflection of the light of the specific wavelengths, but the present disclosure is not limited thereto.

On a cross section vertical to the optical axis and passing through the cylindrical surface, a roundness of the cylindrical surface is not larger than Ø0.05 mm. Therefore, the off-centering problem can be avoided during the assembling.

When on a direction vertical to the optical axis, a maximum distance between the brim surface and the cylindrical surface is Pmax, the following condition can be satisfied: $0.02 \, mm \leq Pmax \leq 1.0 \, mm$. Therefore, the defect can be avoided on the brim surface so as to avoid affecting the optical quality.

The peripheral portion can further include an arc end formed on a side of the brim surface away from the first arc surface, a radius of curvature of the arc end is Rp, and the following condition can be satisfied: $0.02 \, mm \leq Rp \leq 0.5 \, mm$. Therefore, the formation accuracy of the cylindrical surface can be controlled so as to maintain the industrial utility and the quality of the mass production.

The connecting surface can include a second arc surface near to a side of the first arc surface away from the cylindrical surface, and the second arc surface extends from the first arc surface towards the direction close to the optical axis. Further, when on the cross section parallel to and passing through the optical axis, a distance between a side of the first arc surface close to the cylindrical surface and a side of the second arc surface away from the cylindrical surface is C, the following condition can be satisfied: $0.05 \, mm \leq C \leq 1.13 \, mm$. Therefore, the aforementioned disposition is favorable for the demolding so as to ensure and enhance the accuracy of the cylindrical surface.

The glass lens element can further include a low-reflecting surface, wherein the connecting surface can further include a transition surface smooth connected to the first arc surface and the second arc surface, and the low-reflecting surface is disposed on the transition surface. Therefore, the light can be avoided forming the glare owing to the reflection of the transition surface so as to reduce the negative influence of the optical quality via the peripheral portion. Further, the low-reflecting surface can be disposed on at least one of the cylindrical surface, the first arc surface and the brim surface. Therefore, the flare formed from the light via the connecting surface can be avoided so as to enhance the optical performance. In particular, the aforementioned effect of the low-reflecting surface can be achieved by the light-blocking layer, the anti-reflecting layer or the anti-reflecting structure, but the present disclosure is not limited thereto.

The glass lens element can further include a first platform surface vertical to the cylindrical surface. When on the cross section parallel to and passing through the optical axis, the length of the cylindrical surface is L; on a direction vertical to the optical axis, a width of the first platform surface is W1, the following condition can be satisfied: $0.14 \leq L/W1 \leq 3.8$. Hence, the assembling process of the glass lens element can be improved via the first platform surface so as to enhance the yield rate. Further, the first platform surface can be disposed on a side of the brim surface away from the cylindrical surface, between the brim surface and the cylindrical surface or a side of the arc surface away from the cylindrical surface, but the present disclosure is not limited thereto.

The glass lens element can further include a second platform surface disposed relatively to the first platform surface, the first platform surface is parallel to the second platform surface, and a parallelism between the first platform surface and the second platform surface is not larger than 0.05 mm. Therefore, the assembling quality can be ensured.

The glass lens element can further include a frustum surface disposed on a side of the brim surface away from the cylindrical surface, and the frustum surface extends towards a direction away from the brim surface and close to the optical axis. When on the cross section parallel to and passing through the optical axis, an angle between the frustum surface and the cylindrical surface is DOC, the following condition can be satisfied: 10 degrees $\leq$ DOC $\leq$ 60 degrees. Therefore, the flow direction of the glass can be adjusted and controlled so as to ensure the moldability of the glass lens element for promoting the optical quality.

When the cross section parallel to and passing through the optical axis, the length of the cylindrical surface is L, the following condition can be satisfied: 0.03 mm $\leq$ L. Therefore, the stability of the peripheral portion can be ensured.

Each of the aforementioned features of the glass lens element can be utilized in various combinations for achieving the corresponding effects.

The present disclosure provides an imaging lens assembly, which includes the aforementioned glass lens element, at least one optical element and a lens carrier, wherein the optical element is disposed along the optical axis of the glass lens element, and the glass lens element and the optical element are disposed on the lens carrier. In particular, the optical element can be the light-blocking sheet, the spacer, the retainer, the lens element and the reflecting element, but the present disclosure is not limited thereto.

The lens carrier is directly contacted with the cylindrical surface of the glass lens element, and the lens carrier can include a brim surface corresponding structure, wherein the brim surface corresponding structure and the brim surface of the glass lens element are relatively disposed, and a gap is formed between the brim surface and the brim surface corresponding structure. The tilt of the glass lens element can be avoided by the direct contact between the lens carrier and the cylindrical surface and the gap between the lens carrier and the brim surface, so that the optical quality can be ensured. Further, the arc end can be disposed on a side of the brim surface facing towards the brim surface corresponding structure.

The optical element can include a brim surface corresponding structure, wherein the brim surface corresponding structure and the brim surface of the glass lens element are relatively disposed, and a gap is formed between the brim surface and the brim surface corresponding structure. In particular, the arc end can be disposed on a side of the brim surface facing towards the brim surface corresponding structure.

The glass lens element can further include a first platform surface, wherein one of the lens carrier and the optical element is directly contacted with the first platform surface. When on a direction vertical to the optical axis, a width of the first platform surface is W1, the following condition can be satisfied: 0.04 mm $\leq$ W1 $\leq$ 1.7 mm. Hence, the cooperation stability between the elements can be enhanced via the first platform surface so as to enhance the yield rate.

The optical element can include an adjacent lens element, and the glass lens element can further include a frustum surface, wherein the frustum surface is directly contacted with the adjacent lens element. When on the cross section parallel to and passing through the optical axis, an angle between the frustum surface and the cylindrical surface is DOC, the following condition can be satisfied: 10 degrees $\leq$ DOC $\leq$ 60 degrees. Therefore, the offset between the lens elements can be reduced so as to enhance the stacking quality.

Each of the aforementioned features of the imaging lens assembly can be utilized in various combinations for achieving the corresponding effects.

The present disclosure provides a hybrid lens element, which includes a glass main body and a plastic frame. The glass main body has an optical axis, and includes an optical portion and a peripheral portion, wherein the optical axis passes through the optical portion, the peripheral portion is away from the optical axis from the optical portion, and the peripheral portion includes a cylindrical surface, a first arc surface, a brim surface and a connecting surface. The cylindrical surface is configured to define an outer diameter of the glass main body, and the cylindrical surface extends along a direction parallel to the optical axis. The first arc surface is connected to the cylindrical surface, and the first arc surface extends from the cylindrical surface towards a direction close to the optical axis. The brim surface and the first arc surface are disposed relatively to the cylindrical surface, and the brim surface extends and protrudes from the cylindrical surface towards a direction away from the first arc surface. The connecting surface is gradually close to the optical axis from the first arc surface towards a direction away from the brim surface, and the connecting surface is connected to the optical portion. The plastic frame includes an outer annular portion, a first extending portion and a second extending portion, wherein the outer annular portion surrounds and is adjacent to the cylindrical surface. The first extending portion and the second extending portion extend from the outer annular portion towards two sides of the cylindrical surface in a direction away from the outer annular portion, a first tip and a second tip are formed on a surface of the glass main body, respectively, and the first tip is closer to the optical axis than the second tip to the optical axis. When on a cross section parallel to and passing through the optical axis, and an angle of the first tip is T1, the following condition can be satisfied: 5 degrees $\leq$ T1 $\leq$ 121 degrees.

The more stable assembling quality can be provided via the plastic frame, and the first tip and the second tip are configured to stabilize the glass main body on a specific position of the plastic frame. Further, the aforementioned appropriate value range of the angle of the first tip is favorable for controlling the covering range of the plastic frame, so that the optical quality of the off-axis area can be avoided being influenced.

The plastic frame can be made of opaque plastic material. In detail, the opaque plastic material is favorable for preventing the light from entering the glass main body from the plastic frame, so that the glare can be avoided.

The hybrid lens element can further include an anti-reflecting layer disposed on the glass main body and the plastic frame. Therefore, the reflection of the plastic frame can be further reduced so as to optimize the optical quality. Moreover, the anti-reflecting layer can be the light-blocking coating, the anti-reflecting coating, the nanostructure surface, so that the surface thereof can have the lower reflectivity, but the present disclosure is not limited thereto.

When on the cross section parallel to and passing through the optical axis, a radius of curvature of the first arc surface is R, and a length of the cylindrical surface is L, the following condition can be satisfied: $0.11 \leq R/L \leq 6.65$. Further, the following condition can be satisfied: $0.23 \leq R/L \leq 3.3$.

The peripheral portion can further include an arc end formed on a side of the brim surface away from the first arc surface. When a radius of curvature of the arc end is Rp, the following condition can be satisfied: $0.01 \text{ mm} \leq Rp \leq 1.0 \text{ mm}$. Further, the following condition can be satisfied: $0.02 \text{ mm} \leq Rp \leq 0.5 \text{ mm}$.

The connecting surface can include a second arc surface near to a side of the first arc surface away from the cylindrical surface, the second arc surface extends from the first arc surface towards the direction close to the optical axis, and the plastic frame is simultaneously and directly contacted with the first arc surface and the second arc surface. When on the cross section parallel to and passing through the optical axis, a distance between a side of the first arc surface close to the cylindrical surface and a side of the second arc surface away from the cylindrical surface is C, the following condition can be satisfied: $0.05 \text{ mm} \leq C \leq 1.13 \text{ mm}$. The stability of the plastic frame can be further enhanced via the disposition of the first arc surface and the second arc surface. Further, the following condition can be satisfied: $0.1 \text{ mm} \leq C \leq 0.68 \text{ mm}$.

The connecting surface can further include a transition surface smooth connected to the first arc surface and the second arc surface.

The plastic frame can further include an intermediate surface directly contacted with the glass main body. When on a direction vertical to the optical axis, a width of the intermediate surface is Win, the following condition can be satisfied: $0.03 \text{ mm} \leq Win \leq 3.5 \text{ mm}$. Therefore, the axial combination can be enhanced so as to avoid the peel and enhance the yield rate. Further, the following condition can be satisfied: $0.06 \text{ mm} \leq Win \leq 1.7 \text{ mm}$.

The peripheral portion can further include a first platform surface vertical to the cylindrical surface, the first platform surface is disposed on a side corresponding to the second tip, and the first platform surface is closer to the optical axis than the second tip to the optical axis. When a distance between the first platform surface and the second tip on the direction parallel to the optical axis is S, the following condition can be satisfied: $0.02 \text{ mm} \leq S \leq 0.15 \text{ mm}$. Therefore, the interference between the first platform surface and the plastic frame can be avoided so as to promote the yield rate.

The plastic frame can further include a plastic platform surface, wherein the plastic platform surface is relative to the first platform surface, the first platform surface is parallel to the plastic platform surface, and a parallelism between first platform surface and the plastic platform surface is not larger than 0.05 mm.

Each of the aforementioned features of the hybrid lens element can be utilized in various combinations for achieving the corresponding effects.

The present disclosure provides an imaging lens assembly, which includes the aforementioned hybrid lens element, at least one optical element and a lens carrier, wherein the optical element is disposed along the optical axis of the glass main body, and the hybrid lens element and the optical element are disposed on the lens carrier.

The plastic frame can further include a disposing structure, wherein at least one of the optical element and the lens carrier is disposed on the disposing structure, and the plastic frame and the optical element or the plastic frame and the lens carrier can be assembled by bonding. The cooperation between the elements can be enhanced by disposing the optical element on the disposing structure, so that the optical quality can be ensured. Further, the hybrid lens element and the optical element can be preassembled via the disposing structure so as to enhance the production efficiency.

The optical element can include an adjacent lens element, and the glass main body of the hybrid lens element can include a frustum surface, wherein the frustum surface is directly contacted with the adjacent lens element. When on the cross section parallel to and passing through the optical axis, and an angle between the frustum surface and the cylindrical surface is DOC, the following condition can be satisfied: $10 \text{ degrees} \leq DOC \leq 60 \text{ degrees}$.

The glass main body can further include a first platform surface, wherein one of the lens carrier and the optical element is directly contacted with the first platform surface. When on a direction vertical to the optical axis, a width of the first platform surface is W1, the following condition can be satisfied: $0.04 \text{ mm} \leq W1 \leq 1.7 \text{ mm}$.

When on the cross section parallel to and passing through the optical axis, an angle of the first tip is T1, and an angle of the second tip is T2, the following conditions can be satisfied: $17 \text{ degrees} \leq T1 \leq 106 \text{ degrees}$; and $17 \text{ degrees} \leq T2 \leq 106 \text{ degrees}$. Therefore, the moldability of the first tip and the second tip can be ensured so as to maintain the optical quality of the glass main body.

Each of the aforementioned features of the imaging lens assembly can be utilized in various combinations for achieving the corresponding effects.

The present disclosure provides an image capturing apparatus, which includes the aforementioned imaging lens assembly.

The present disclosure provides an electronic device, which includes the aforementioned image capturing apparatus.

According to the aforementioned embodiment, specific examples are provided, and illustrated via figures.

<1st example>

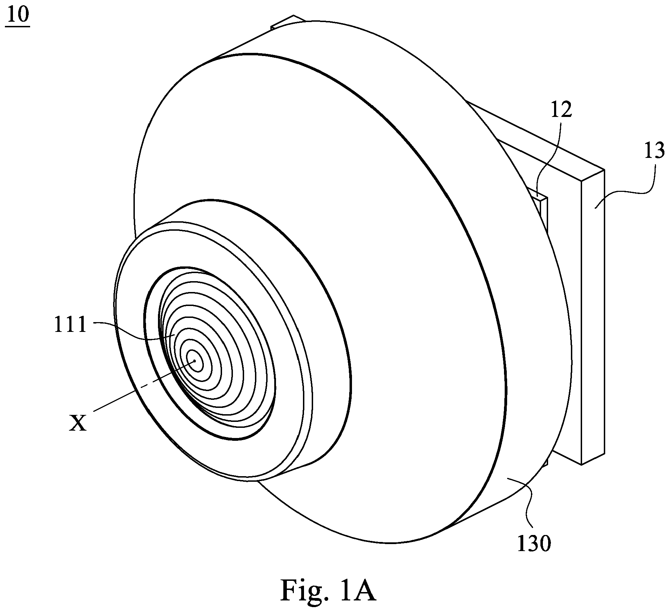

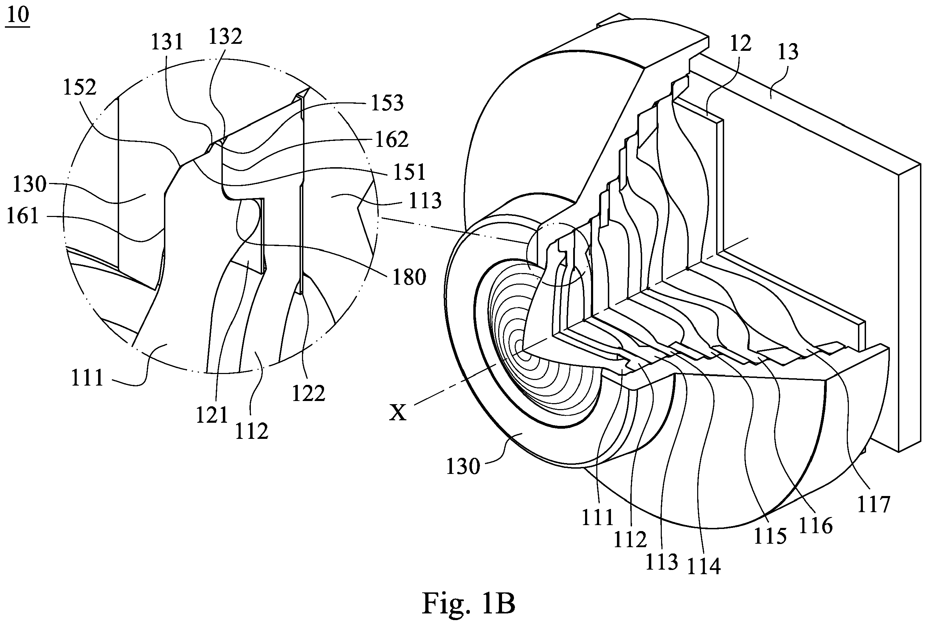

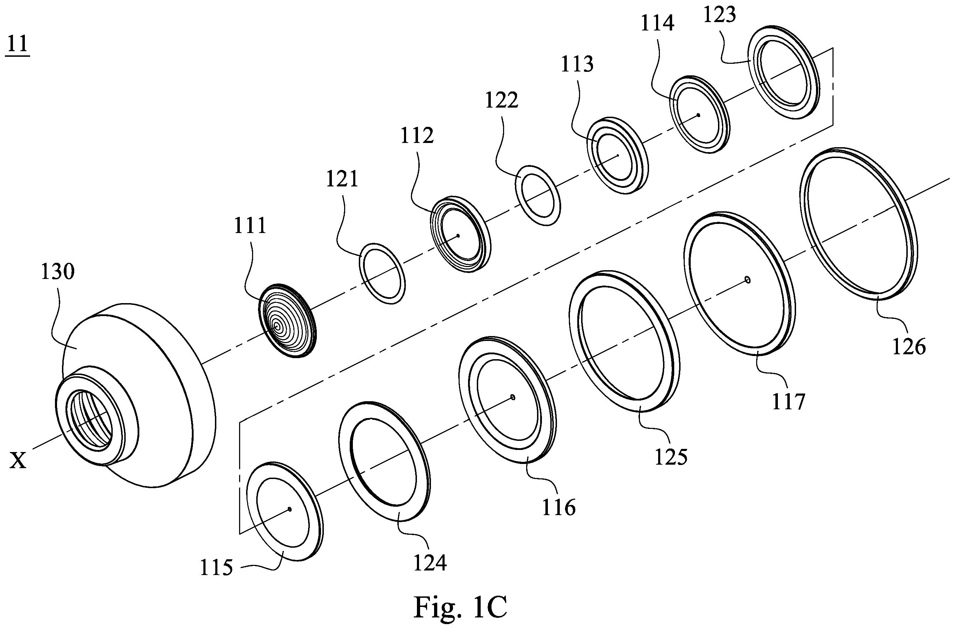

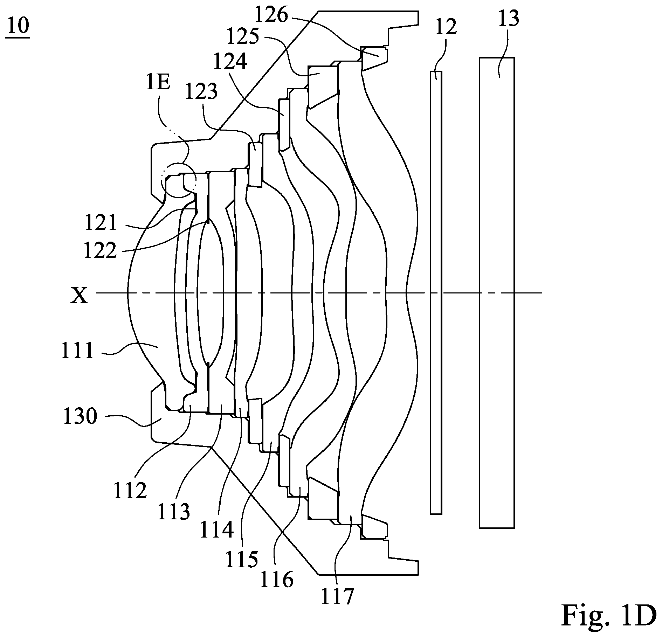

Fig. 1A is a three-dimensional view of an image capturing apparatus 10 according to the 1st example of the present disclosure. Fig. 1B is a partial cross-sectional view of the image capturing apparatus 10 according to the 1st example in Fig. 1A. Fig. 1C is an exploded view of an imaging lens assembly 11 according to the 1st example in Fig. 1A. Fig. 1D is a schematic view of the image capturing apparatus 10 according to the 1st example in Fig. 1A. In Figs. 1A to 1D, the image capturing apparatus 10 includes an imaging lens assembly 11, a plate element 12 and an image sensor 13, wherein the plate element 12 is disposed on an image side of the imaging lens assembly 11, and the image sensor 13 is disposed on an image surface (its reference numeral is omitted) of the imaging lens assembly 11.

In Figs. 1B to 1D, the imaging lens assembly 11 includes a glass lens element, at least one optical element and a lens carrier 130, wherein the optical element is disposed along an optical axis X of the glass lens element, and the glass lens element and the optical element are disposed on the lens carrier 130. In particular, the imaging lens assembly 11, in order from an object side to the image side, includes a first lens element 111, a first light-blocking element 121, a second lens element 112, a second light-blocking element 122, a third lens element 113, a fourth lens element 114, a first spacer 123, a fifth lens element 115, a second spacer 124, a sixth lens element 116, a third spacer 125, a seventh lens element 117 and a retainer 126, wherein the first lens element 111 is the glass lens element, the second lens element 112 is an adjacent lens element of the first lens element 111, and the second lens element 112, the third lens element 113, the fourth lens element 114, the fifth lens element 115, the sixth lens element 116, the seventh lens element 117, the first light-blocking element 121, the second light-blocking element 122, the first spacer 123, the second spacer 124, the third spacer 125 and the retainer 126 are the optical elements. It should be mentioned that the glass lens element generally refers to the lens element mainly made of the mineral, and the mineral can be the glass material as silicon oxide, aluminum oxide, potassium oxide, sodium oxide and boron oxide, and the metal material, the nonmetal material and the polymer material can be further added in the glass material, so that the glass lens element can have the function as the anti-ultraviolet light, the anti-infrared light and the reflection of the light of the specific wavelengths, and the optical element can be the light-blocking sheet, the spacer, the retainer, the lens element and the reflecting element, but the present disclosure is not limited thereto, wherein the optical features such as numbers, structures, surface shapes and so on of the optical elements can be disposed according to different imaging demand, another optical elements can be further disposed according to the requirements, and the optical features are not limited thereto.

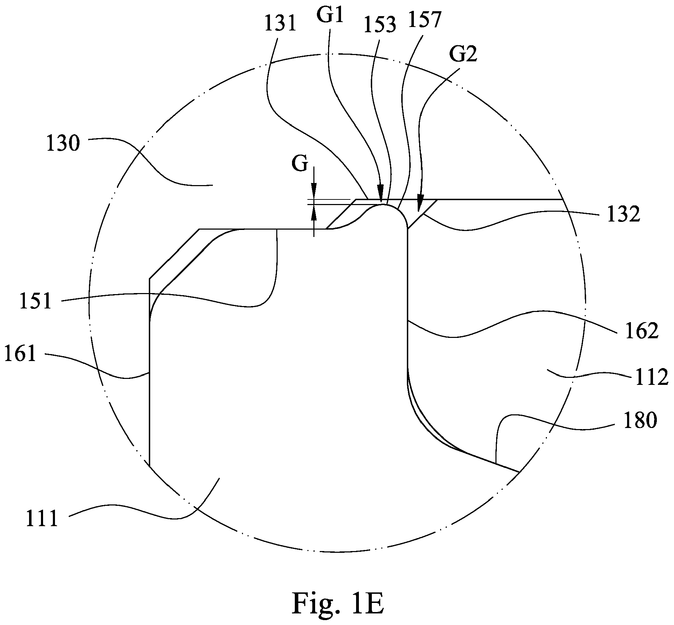

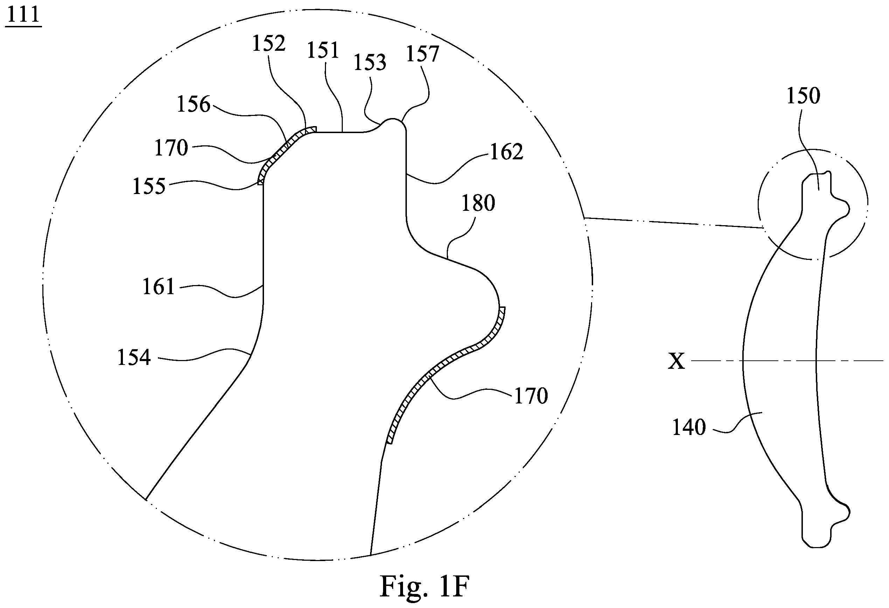

Fig. 1E is a partial enlarged view of the image capturing apparatus 10 according to the 1st example in Fig. 1D. Fig. 1F is a schematic view of the first lens element 111 according to the 1st example in Fig. 1D. In Figs. 1E and 1F, the first lens element 111 has the optical axis X, and includes an optical portion 140 and a peripheral portion 150, wherein the optical axis X passes through the optical portion 140, the peripheral portion 150 is away from the optical axis X from the optical portion 140, and the peripheral portion 150 includes a cylindrical surface 151, a first arc surface 152, a brim surface 153 and a connecting surface 154.

Furthermore, the cylindrical surface 151 is configured to define an outer diameter of the first lens element 111, and the cylindrical surface 151 extends along the optical axis X. The first arc surface 152 is connected to the cylindrical surface 151, and the first arc surface 152 extends from the cylindrical surface 151 towards a direction close to the optical axis X. The brim surface 153 and the first arc surface 152 are disposed relatively to the cylindrical surface 151, the brim surface 153 extends and protrudes from the cylindrical surface 151 towards a direction away from the first arc surface 152, and the peripheral portion 150 is smooth connected from the first arc surface 152 towards the brim surface 153. The connecting surface 154 is gradually close to the optical axis X from the first arc surface 152 towards a direction away from the brim surface 153, and the connecting surface 154 is connected to the optical portion 140.

The flow direction of the glass can be controlled by the connecting surface 154 continuously close to the optical axis X from the brim surface 153 towards the first arc surface 152, so that the defect can be avoided. Further, by the first arc surface 152 and the brim surface 153 relative to the cylindrical surface 151 and the peripheral portion 150 smooth connected from the first arc surface 152 towards the brim surface 153, the optimization effect of the quality of the cylindrical surface 151 can be ensured.

In particular, the outer diameter of the first lens element 111 defined via the cylindrical surface 151 means that the diameter dimension, which is the measurement, the disposition and the control of the first lens element 111, rather than the maximum range of the diameter.

The first lens element 111 can further include a first platform surface 161 and a second platform surface 162, wherein the first platform surface 161 is vertical to the cylindrical surface 151, and the first platform surface 161 can be disposed on a side of the first arc surface 152 away from the cylindrical surface 151, and the lens carrier 130 is directly contacted with the first platform surface 161. The second platform surface 162 is disposed relatively to the first platform surface 161, the first platform surface 161 is parallel to the second platform surface 162, a parallelism between the first platform surface 161 and the second platform surface 162 is not larger than 0.05 mm, and the second platform surface 162 is directly contacted with the second lens element 112. Hence, via the first platform surface 161, the assembling process of the first lens element 111 can be improved and the cooperation stability between the elements can be enhanced, and the assemblability can be ensured by relative disposition between the first platform surface 161 and the second platform surface 162 so as to enhance the yield rate.

In Fig. 1F, the connecting surface 154 can include a second arc surface 155 and a transition surface 156, wherein the transition surface 156 is smooth connected to the first arc surface 152 and the second arc surface 155, the second arc surface 155 is near to a side of the first arc surface 152 away from the cylindrical surface 151, and the second arc surface 155 extends from the first arc surface 152 towards the direction close to the optical axis X. Therefore, the aforementioned disposition is favorable for the demolding so as to ensure and enhance the accuracy of the cylindrical surface 151.

The first lens element 111 can further include a low-reflecting surface 170, wherein the low-reflecting surface 170 is disposed on the first arc surface 152 and the transition surface 156. Therefore, the light can be avoided forming the glare owing to the reflection of the connecting surface 154 and the transition surface 156 so as to reduce the negative influence of the optical quality via the peripheral portion 150, and the optical performance can be enhanced. According to the 1st example, the low-reflecting surface 170 is the light-blocking layer, which is only configured to indicate the position thereof rather than the actual thickness thereof.

The first lens element 111 can further include a frustum surface 180 disposed on a side of the brim surface 153 away from the cylindrical surface 151, and the frustum surface 180 extends towards a direction away from the brim surface 153 and close to the optical axis X. Therefore, the flow direction of the glass can be adjusted and controlled so as to ensure the moldability of the first lens element 111 for promoting the optical quality. Further, the frustum surface 180 is directly contacted with the second lens element 112, so that the offset between the lens elements can be reduced, and the stacking quality can be further enhanced.

In Fig. 1E, the lens carrier 130 is directly contacted with the cylindrical surface 151 of the first lens element 111, wherein the lens carrier 130 can include a brim surface corresponding structure 131, the brim surface corresponding structure 131 and the brim surface 153 of the first lens element 111 are relatively disposed, and a gap G1 is formed between the brim surface 153 and the brim surface corresponding structure 131. The tilt of the first lens element 111 can be avoided by the direct contact between the lens carrier 130 and the cylindrical surface 151 and the gap G1 between the lens carrier 130 and the brim surface 153, so that the optical quality can be ensured.

The second lens element 112 can include a brim surface corresponding structure 132, wherein the brim surface corresponding structure 132 and the brim surface 153 of the first lens element 111 are relatively disposed, and a gap G2 is formed between the brim surface 153 and the brim surface corresponding structure 132.

The peripheral portion 150 can further include an arc end 157 formed on a side of the brim surface 153 away from the first arc surface 152, and the arc end 157 can be disposed on a side of the brim surface 153 facing towards the brim surface corresponding structure 132.

On a cross section vertical to the optical axis X and passing through the cylindrical surface 151, a roundness of the cylindrical surface 151 is not larger than Ø0.05 mm. Therefore, the off-centering problem can be avoided during the assembling.

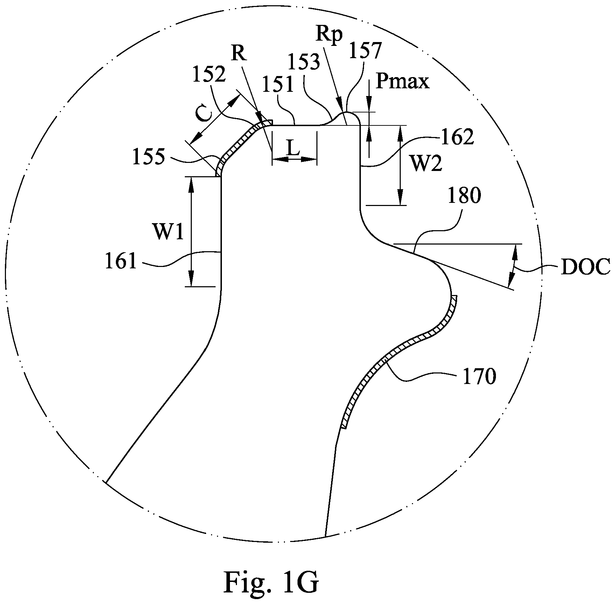

Fig. 1G is a partial enlarged view of the first lens element 111 according to the 1st example in Fig. 1F. In Figs. 1E to 1G, when on a cross section parallel to and passing through the optical axis X, a radius of curvature of the first arc surface 152 is R, a length of the cylindrical surface 151 is L, a distance between a side of the first arc surface 152 close to the cylindrical surface 151 and a side of the second arc surface 155 away from the cylindrical surface 151 is C, and an angle between the frustum surface 180 and the cylindrical surface 151 is DOC; on a direction vertical to the optical axis X, a maximum distance between the brim surface 153 and the cylindrical surface 151 is Pmax, a width of the first platform surface 161 is W1, a width of the second platform surface 162 is W2, and a width of the gap G1 is G; a radius of curvature of the arc end 157 is Rp, the following conditions of Table 1 are satisfied.

| Table 1, the 1st example | | | |
|---|---|---|---|
| R (mm) | 0.1 | W2 (mm) | 0.293 |
| L (mm) | 0.168 | Rp (mm) | 0.05 |
| C (mm) | 0.27 | G (mm) | 0.01 |
| DOC (degree) | 20 | R/L | 0.595 |

(continued)

| Table 1, the 1st example | | | |
|---|---|---|---|
| Pmax (mm) | 0.05 | L/W1 | 0.408 |
| W1 (mm) | 0.412 | L/W2 | 0.573 |

<2nd example>

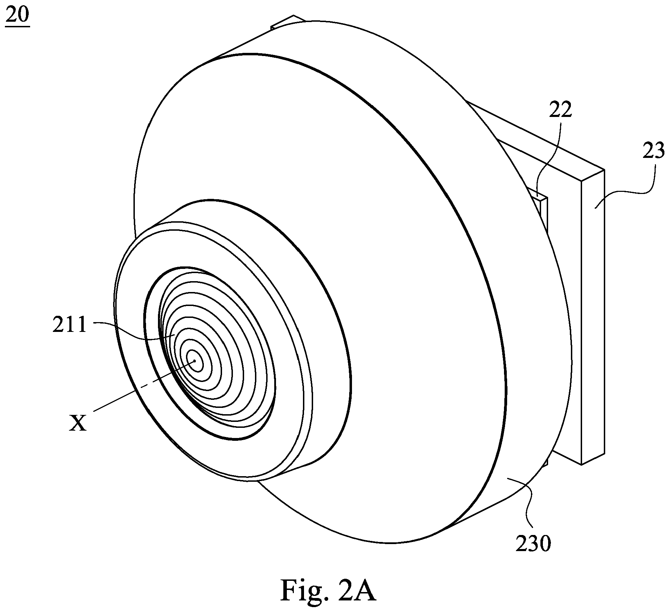

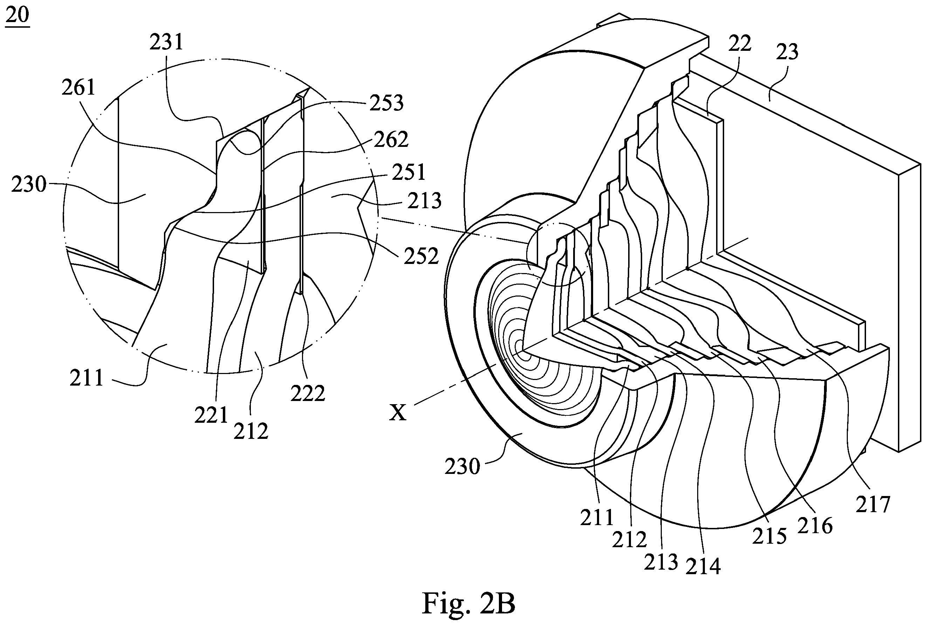

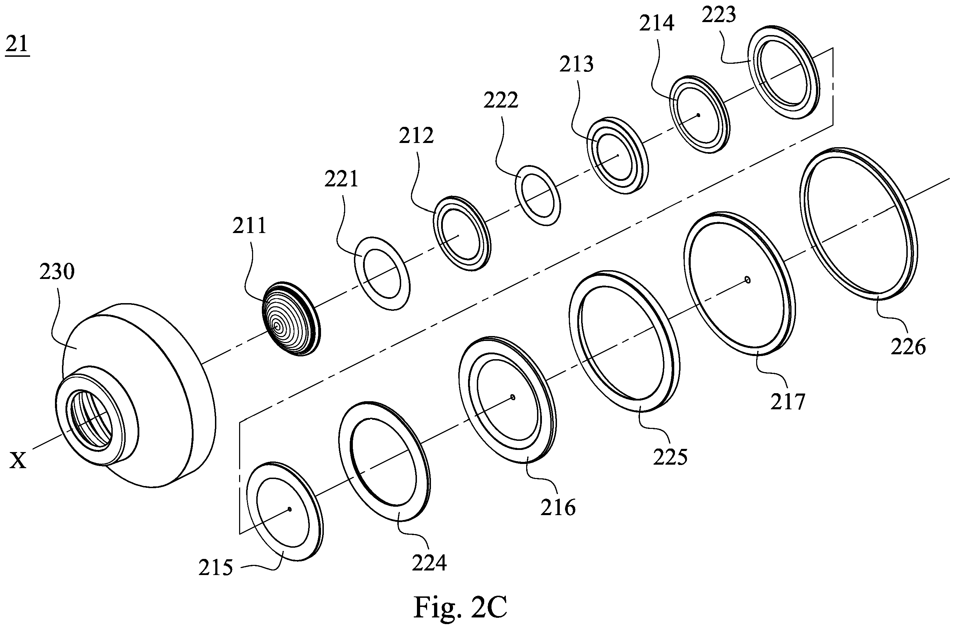

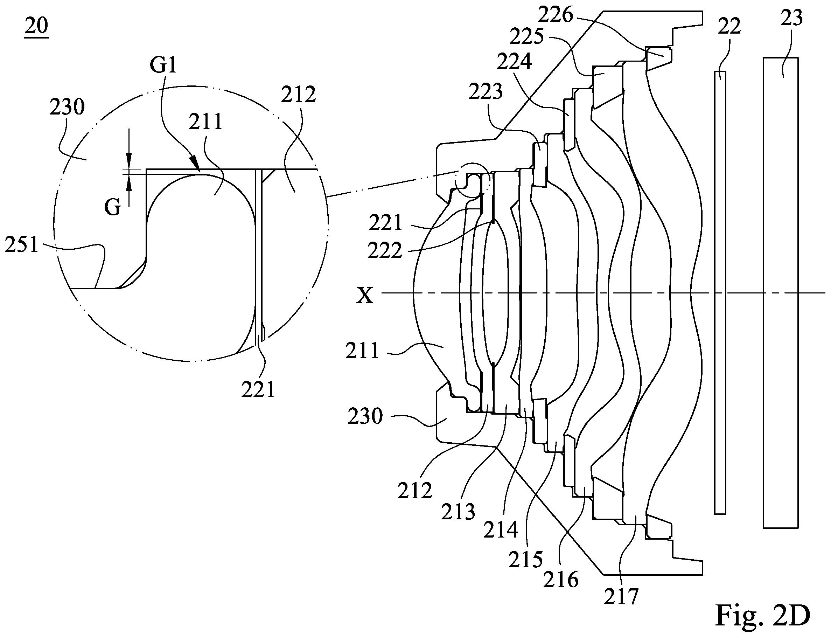

Fig. 2A is a three-dimensional view of an image capturing apparatus 20 according to the 2nd example of the present disclosure. Fig. 2B is a partial cross-sectional view of the image capturing apparatus 20 according to the 2nd example in Fig. 2A. Fig. 2C is an exploded view of the imaging lens assembly 21 according to the 2nd example in Fig. 2A. Fig. 2D is a schematic view of the image capturing apparatus 20 according to the 2nd example in Fig. 2A. In Figs. 2A to 2D, the image capturing apparatus 20 includes an imaging lens assembly 21, a plate element 22 and an image sensor 23, wherein the plate element 22 is disposed on an image side of the imaging lens assembly 21, and the image sensor 23 is disposed on an image surface (its reference numeral is omitted) of the imaging lens assembly 21.

In Figs. 2B to 2D, the imaging lens assembly 21 includes a glass lens element, at least one optical element and a lens carrier 230, wherein the optical element is disposed along an optical axis X of the glass lens element, and the glass lens element and the optical element are disposed on the lens carrier 230. In particular, the imaging lens assembly 21, in order from an object side to the image side, includes a first lens element 211, a first light-blocking element 221, a second lens element 212, a second light-blocking element 222, a third lens element 213, a fourth lens element 214, a first spacer 223, a fifth lens element 215, a second spacer 224, a sixth lens element 216, a third spacer 225, a seventh lens element 217 and a retainer 226, wherein the first lens element 211 is the glass lens element, the second lens element 212 is an adjacent lens element of the first lens element 211, and the second lens element 212, the third lens element 213, the fourth lens element 214, the fifth lens element 215, the sixth lens element 216, the seventh lens element 217, the first light-blocking element 221, the second light-blocking element 222, the first spacer 223, the second spacer 224, the third spacer 225 and the retainer 226 are the optical elements.

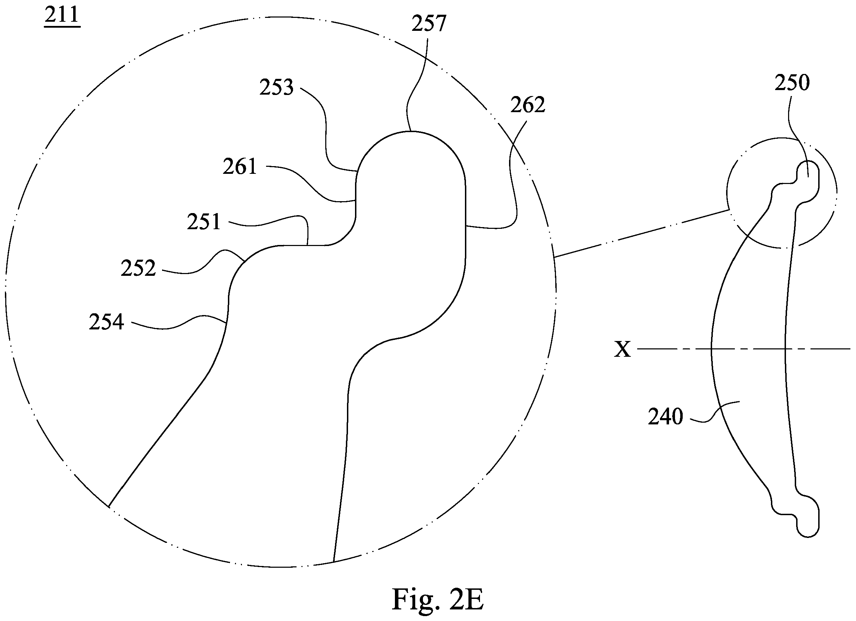

Fig. 2E is a schematic view of the first lens element 211 according to the 2nd example in Fig. 2D. In Figs. 2D and 2E, the first lens element 211 has the optical axis X, and includes an optical portion 240 and a peripheral portion 250, wherein the optical axis X passes through the optical portion 240, the peripheral portion 250 is away from the optical axis X from the optical portion 240, and the peripheral portion 250 includes a cylindrical surface 251, a first arc surface 252, a brim surface 253 and a connecting surface 254.

Furthermore, the cylindrical surface 251 is configured to define an outer diameter of the first lens element 211, and the cylindrical surface 251 extends along the optical axis X. The first arc surface 252 is connected to the cylindrical surface 251, and the first arc surface 252 extends from the cylindrical surface 251 towards a direction close to the optical axis X. The brim surface 253 and the first arc surface 252 are disposed relatively to the cylindrical surface 251, the brim surface 253 extends and protrudes from the cylindrical surface 251 towards a direction away from the first arc surface 252, and the peripheral portion 250 is smooth connected from the first arc surface 252 towards the brim surface 253. The connecting surface 254 is gradually close to the optical axis X from the first arc surface 252 towards a direction away from the brim surface 253, and the connecting surface 254 is connected to the optical portion 240.

In Figs. 2B and 2E, the first lens element 211 can further include a first platform surface 261 and a second platform surface 262, wherein the first platform surface 261 is vertical to the cylindrical surface 251, the first platform surface 261 can be disposed between the cylindrical surface 251 and the brim surface 253, and the lens carrier 230 is directly contacted with the first platform surface 261. The second platform surface 262 is disposed relatively to the first platform surface 261, the first platform surface 261 is parallel to the second platform surface 262, a parallelism between the first platform surface 261 and the second platform surface 262 is not larger than 0.05 mm, and the second platform surface 262 is directly contacted with the first light-blocking element 221. Further, the brim surface 253 can include the first platform surface 261.

In Fig. 2B, the lens carrier 230 is directly contacted with the cylindrical surface 251 of the first lens element 211, wherein the lens carrier 230 can include a brim surface corresponding structure 231, the brim surface corresponding structure 231 and the brim surface 253 of the first lens element 211 are relatively disposed, and a gap G1 is formed between the brim surface 253 and the brim surface corresponding structure 231.

The peripheral portion 250 can further include an arc end 257 formed on a side of the brim surface 253 away from the first arc surface 252.

On a cross section vertical to the optical axis X and passing through the cylindrical surface 251, a roundness of the cylindrical surface 251 is not larger than Ø0.05 mm.

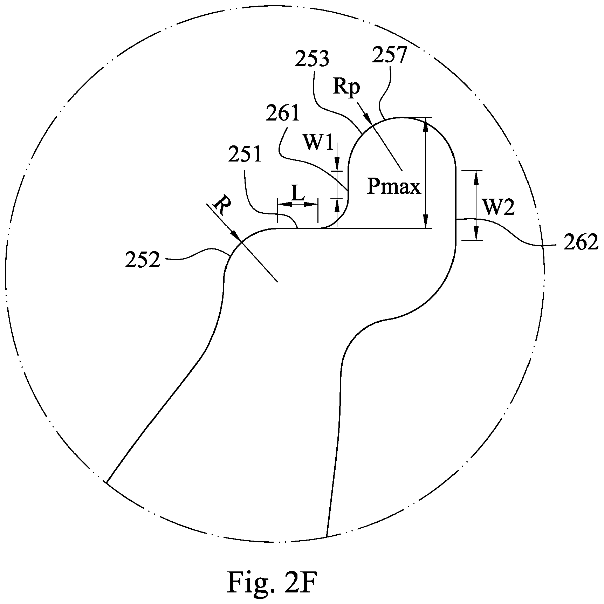

Fig. 2F is a partial enlarged view of the first lens element 211 according to the 2nd example in Fig. 2E. In Figs. 2D to 2F, when on a cross section parallel to and passing through the optical axis X, a radius of curvature of the first arc surface 252 is R, and a length of the cylindrical surface 251 is L; on a direction vertical to the optical axis X, a maximum distance between the brim surface 253 and the cylindrical surface 251 is Pmax, a width of the first platform surface 261 is W1, a width of the second platform surface 262 is W2, and a width of the gap G1 is G; a radius of curvature of the arc end 257 is Rp, the following conditions of Table 2 are satisfied.

| Table 2, 2nd example | | | |
| --- | --- | --- | --- |
| R (mm) | 0.2 | Rp (mm) | 0.2 |
| L (mm) | 0.15 | G (mm) | 0.02 |
| Pmax (mm) | 0.4155 | R/L | 1.333 |
| W1 (mm) | 0.1 | L/W1 | 1.5 |
| W2 (mm) | 0.26 | L/W2 | 0.577 |

<3rd example>

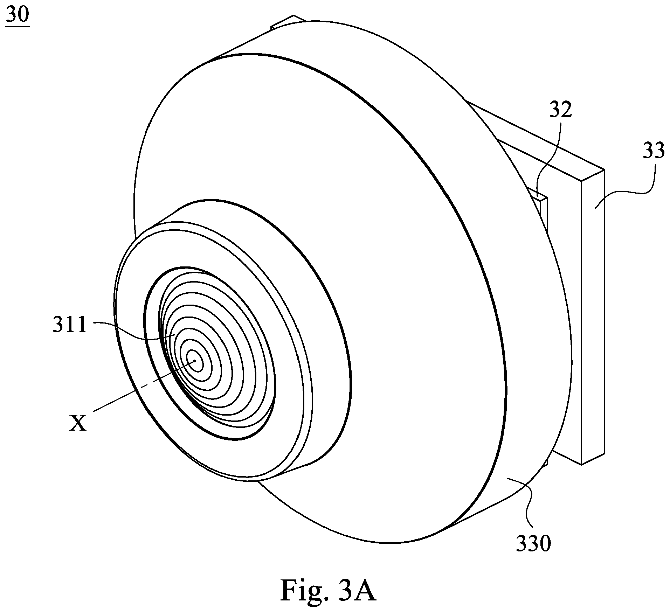

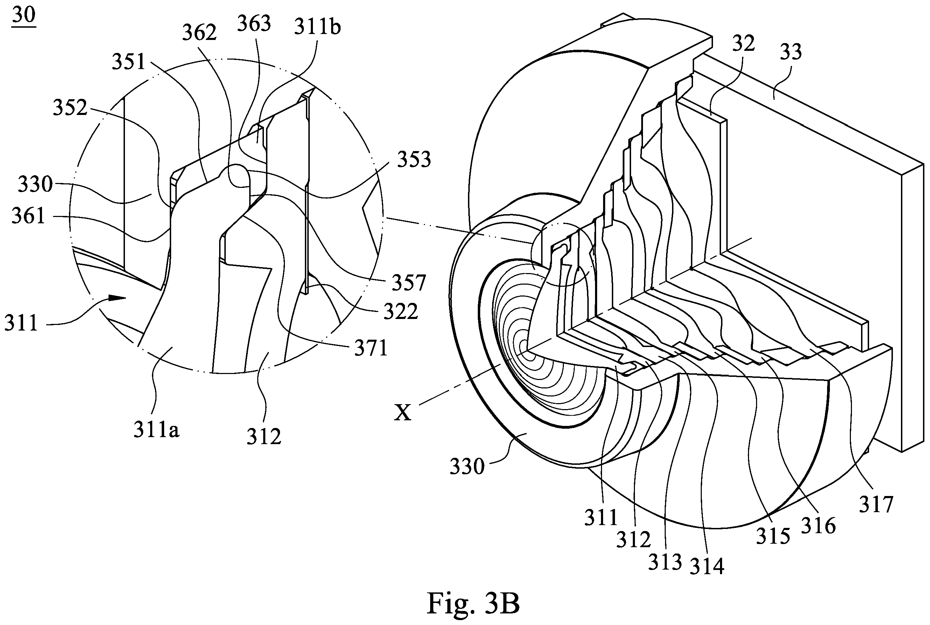

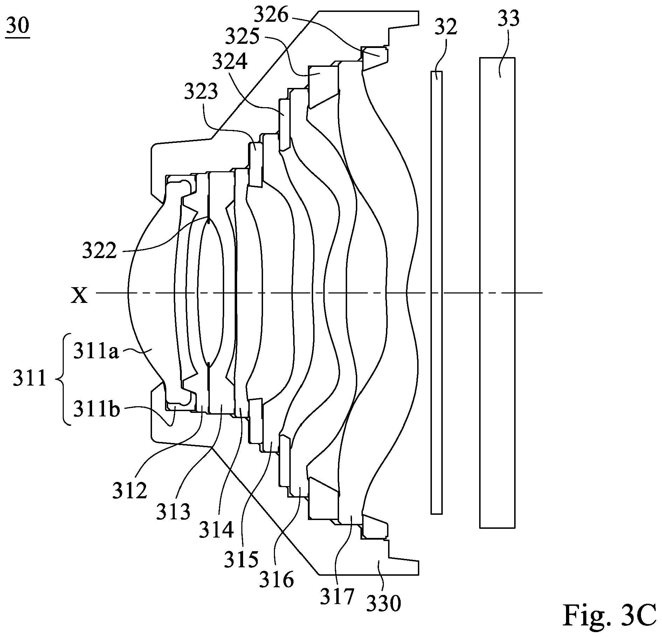

Fig. 3A is a three-dimensional view of an image capturing apparatus 30 according to the 3rd example of the present disclosure. Fig. 3B is a partial cross-sectional view of the image capturing apparatus 30 according to the 3rd example in Fig. 3A. Fig. 3C is a schematic view of the image capturing apparatus 30 according to the 3rd example in Fig. 3A. In Figs. 3A to 3C, the image capturing apparatus 30 includes an imaging lens assembly (its reference numeral is omitted), a plate element 32 and an image sensor 33, wherein the plate element 32 is disposed on an image side of the imaging lens assembly, and the image sensor 33 is disposed on an image surface (its reference numeral is omitted) of the imaging lens assembly.

In Figs. 3B and 3C, the imaging lens assembly includes a hybrid lens element, at least one optical element and a lens carrier 330, wherein the optical element is disposed along the optical axis X, and the hybrid lens element and the optical element are disposed on the lens carrier 330. In particular, the imaging lens assembly, in order from an object side to the image side, includes a first lens element 311, a second lens element 312, a light-blocking element 322, a third lens element 313, a fourth lens element 314, a first spacer 323, a fifth lens element 315, a second spacer 324, a sixth lens element 316, a third spacer 325, a seventh lens element 317 and a retainer 326, wherein the first lens element 311 is the hybrid lens element, the second lens element 312 is an adjacent lens element of the first lens element 311, and the second lens element 312, the third lens element 313, the fourth lens element 314, the fifth lens element 315, the sixth lens element 316, the seventh lens element 317, the light-blocking element 322, the first spacer 323, the second spacer 324, the third spacer 325 and the retainer 326 are the optical elements.

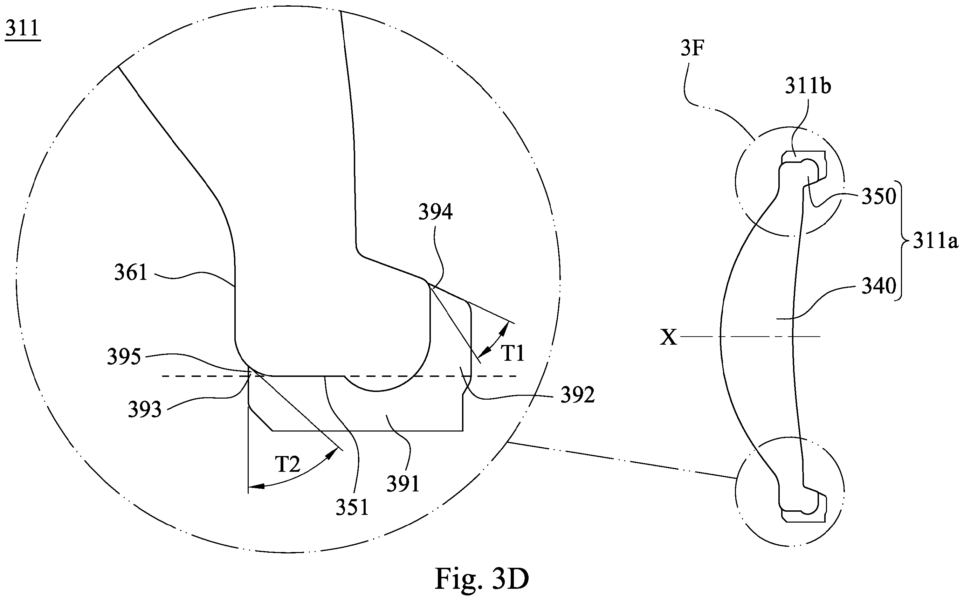

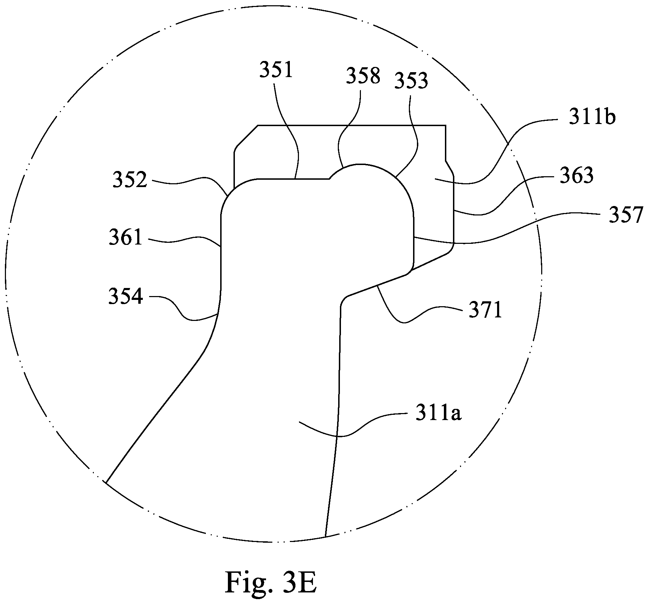

Fig. 3D is a schematic view of the first lens element 311 according to the 3rd example in Fig. 3C. Fig. 3E is a partial enlarged view of the first lens element 311 according to the 3rd example in Fig. 3D. In Figs. 3B, 3D and 3E, the first lens element 311 includes a glass main body 311a and a plastic frame 311b, and the glass main body 311a has the optical axis X, wherein the glass main body 311a includes an optical portion 340 and a peripheral portion 350, and the plastic frame 311b includes an outer annular portion 391, a first extending portion 392 and a second extending portion 393.

Moreover, the optical axis X passes through the optical portion 340, the peripheral portion 350 is away from the optical axis X from the optical portion 340, and the peripheral portion 350 includes a cylindrical surface 351, a first arc surface 352, a brim surface 353 and a connecting surface 354, wherein the cylindrical surface 351 is configured to define an outer diameter of the glass main body 311a, and the cylindrical surface 351 extends along a direction parallel to the optical axis X. The first arc surface 352 is connected to the cylindrical surface 351, and the first arc surface 352 extends from the cylindrical surface 351 towards a direction close to the optical axis X. The brim surface 353 and the first arc surface 352 are disposed relatively to the cylindrical surface 351, and the brim surface 353 extends and protrudes from the cylindrical surface 351 towards a direction away from the first arc surface 352. The connecting surface 354 is gradually close to the optical axis X from the first arc surface 352 towards a direction away from the brim surface 353, and the connecting surface 354 is connected to the optical portion 340.

In Fig. 3D, the outer annular portion 391 surrounds and is adjacent to the cylindrical surface 351, the first extending portion 392 and the second extending portion 393 extend from the outer annular portion 391 towards two sides of the cylindrical surface 351 in a direction away from the outer annular portion 391, a first tip 394 and a second tip 395 are formed on a surface of the glass main body 311a, respectively, and the first tip 394 is closer to the optical axis X than the second tip 395 to the optical axis X. The more stable assembling quality can be provided via the plastic frame 311b, and the first tip 394 and the second tip 395 are configured to stabilize the glass main body 311a on a specific position of the plastic frame 311b.

The plastic frame 311b can be made of opaque plastic material, so that the opaque plastic material is favorable for preventing the light from entering the glass main body 311a from the plastic frame 311b, so that the glare can be avoided.

In Figs. 3B and 3E, the plastic frame 311b can further include an intermediate surface 357 directly contacted with the glass main body 311a. Therefore, the axial combination can be enhanced so as to avoid the peel and enhance the yield rate.

In Fig. 3E, the peripheral portion 350 can further include an arc end 358 formed on a side of the brim surface 353 away from the first arc surface 352.

In Figs. 3B, 3D and 3E, the peripheral portion 350 can further include a first platform surface 361 vertical to the cylindrical surface 351, the first platform surface 361 is disposed on a side corresponding to the second tip 395, the first platform surface 361 is closer to the optical axis X than the second tip 395 to the optical axis X, and the lens carrier 330 is directly contacted with the first platform surface 361. Therefore, the interference between the first platform surface 361 and the plastic frame 311b can be avoided so as to promote the yield rate.

In Figs. 3B and 3E, the plastic frame 311b can further include a plastic platform surface 363, wherein the plastic platform surface 363 is relative to the first platform surface 361, the first platform surface 361 is parallel to the plastic platform surface 363, and a parallelism between the first platform surface 361 and the plastic platform surface 363 is not larger than 0.05 mm.

The glass main body 311a of the first lens element 311 can include a frustum surface 371, wherein the frustum surface 371 is directly contacted with the second lens element 312.

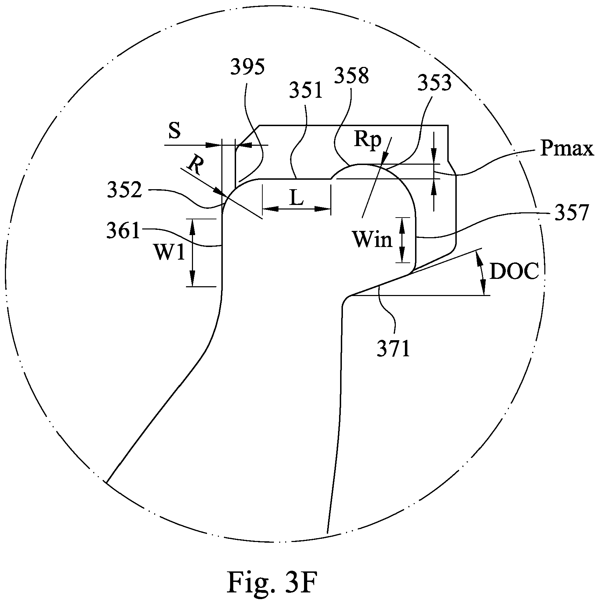

Fig. 3F is a schematic view of the parameters of the first lens element 311 according to the 3rd example in Fig. 3D. In Figs. 3D to 3F, when on a cross section parallel to and passing through the optical axis X, a radius of curvature of the first arc surface 352 is R, a length of the cylindrical surface 351 is L, an angle between the frustum surface 371 and the cylindrical surface 351 is DOC, an angle of the first tip 394 is T1, and an angle of the second tip 395 is T2; on a direction vertical to the optical axis X, a maximum distance between the brim surface 353 and the cylindrical surface 351 is Pmax, a width of the first platform surface 361 is W1, and a width of the intermediate surface 357 is Win; a radius of curvature of the arc end 358 is Rp, and a distance between the first platform surface 361 and the second tip 395 on the direction parallel to the optical axis X is S, the following conditions of Table 3 are satisfied.

| Table 3, 3rd example | | | |
|---|---|---|---|
| R (mm) | 0.15 | T2 (degree) | 48 |
| L (mm) | 0.255 | Win (mm) | 0.169 |
| DOC (degree) | 20 | S (mm) | 0.05 |
| Pmax (mm) | 0.055 | R/L | 0.588 |
| W1 (mm) | 0.253 | L/W1 | 1.008 |
| Rp (mm) | 0.2 | L/Win | 1.509 |
| T1 (degree) | 30 | | |

<4th example>

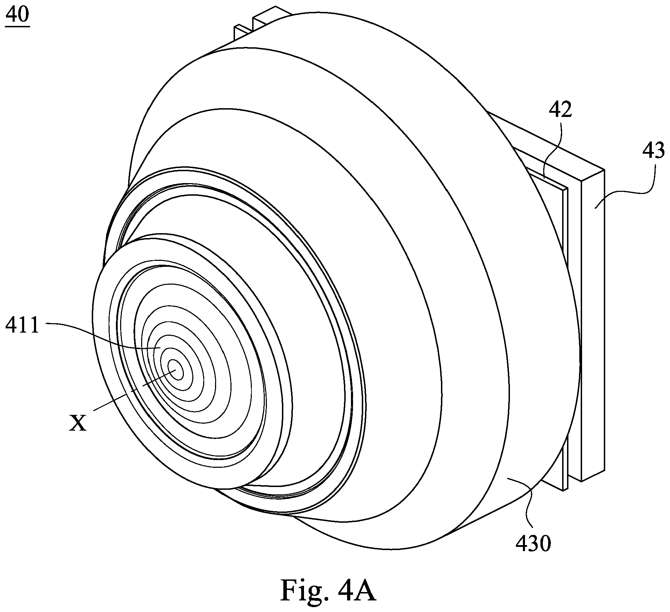

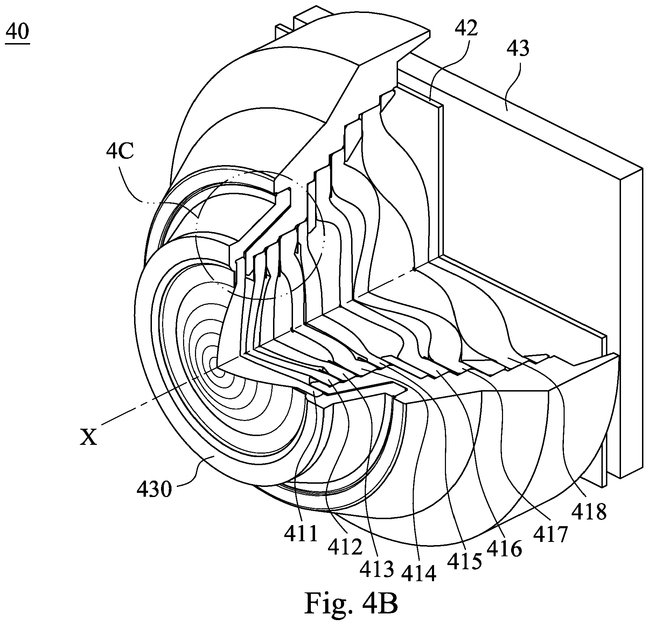

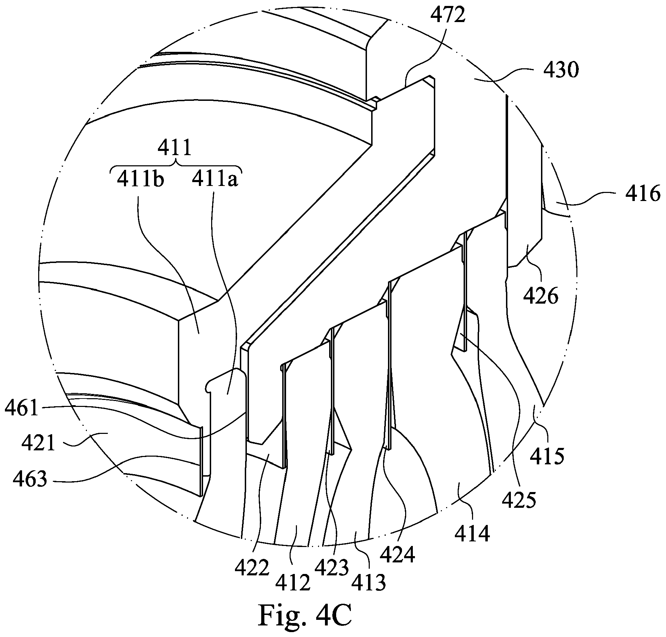

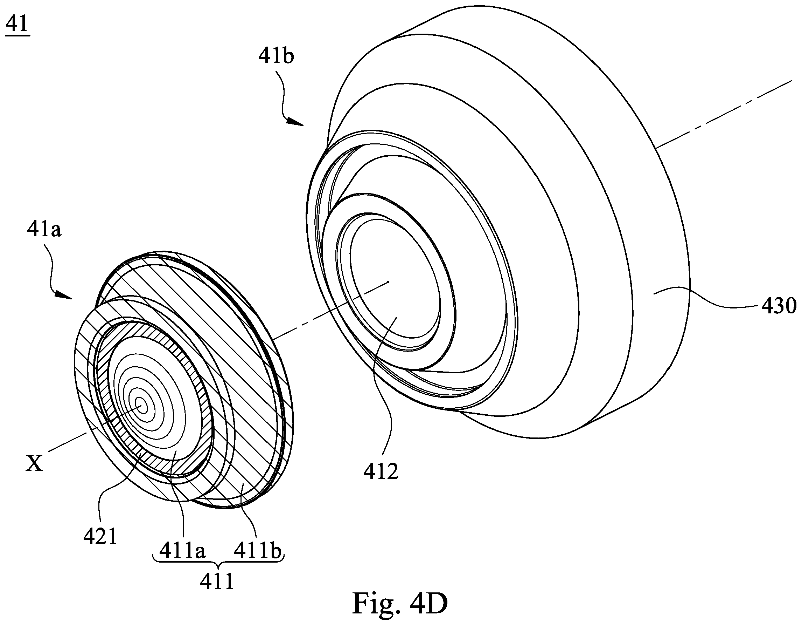

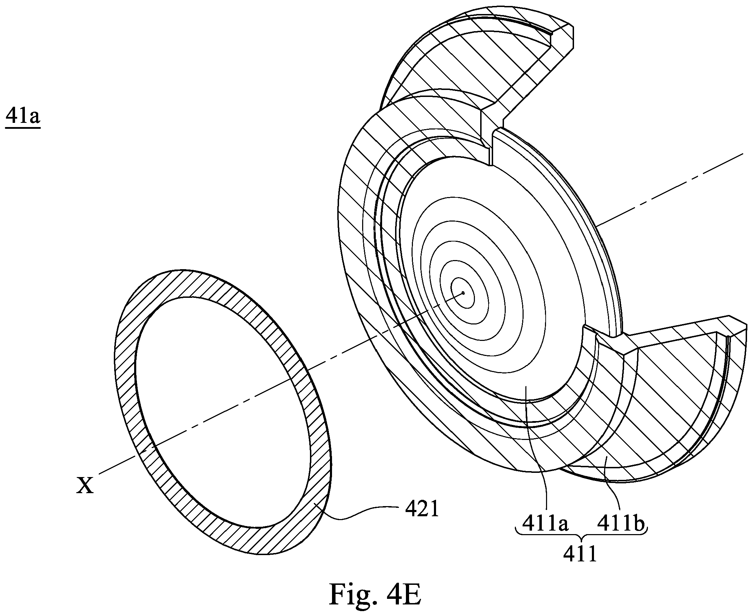

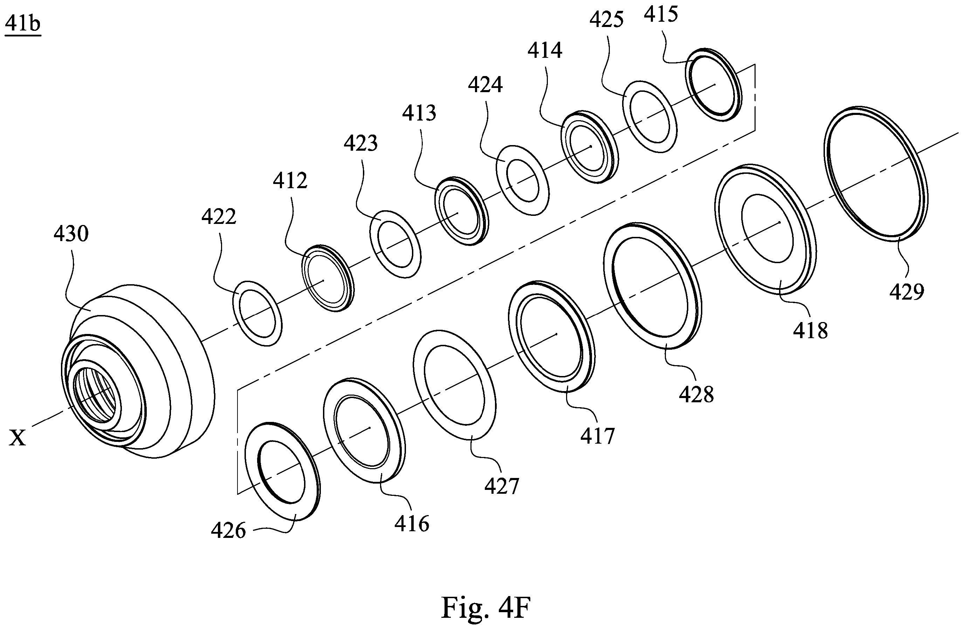

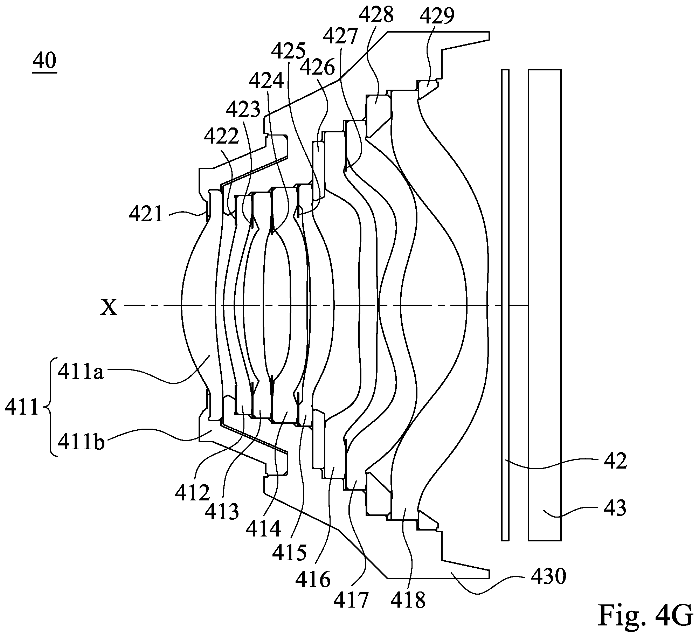

Fig. 4A is a three-dimensional view of an image capturing apparatus 40 according to the 4th example of the present disclosure. Fig. 4B is a partial cross-sectional view of the image capturing apparatus 40 according to the 4th example in Fig. 4A. Fig. 4C is a partial enlarged view of the image capturing apparatus 40 according to the 4th example in Fig. 4B. Fig. 4D is an exploded view of an imaging lens assembly 41 according to the 4th example in Fig. 4A. Fig. 4E is an exploded view of a first lens group 41a according to the 4th example in Fig. 4A. Fig. 4F is an exploded view of a second lens group 41b according to the 4th example in Fig. 4A. Fig. 4G is a schematic view of the image capturing apparatus 40 according to the 4th example in Fig. 4A. In Figs. 4A to 4G, the image capturing apparatus 40 includes the imaging lens assembly 41, a plate element 42 and an image sensor 43, wherein the plate element 42 is disposed on an image side of the imaging lens assembly 41, and the image sensor 43 is disposed on an image surface (its reference numeral is omitted) of the imaging lens assembly 41.

In Figs. 4B to 4G, the imaging lens assembly 41 includes a hybrid lens element, at least one optical element and a lens carrier 430, wherein the optical element is disposed along an optical axis X, and the hybrid lens element and the optical element are disposed on the lens carrier 430. In particular, the imaging lens assembly 41 includes the first lens group 41a and the second lens group 41b, wherein the first lens group 41a, in order from an object side to an image side, includes a first light-blocking element 421 and a first lens element 411, and the second lens group 41b, in order from an object side to an image side, includes a second light-blocking element 422, a second lens element 412, a third light-blocking element 423, a third lens element 413, a fourth light-blocking element 424, a fourth lens element 414, a fifth light-blocking element 425, a fifth lens element 415, a first spacer 426, a sixth lens element 416, a sixth light-blocking element 427, a seventh lens element 417, a second spacer 428, an eighth lens element 418 and a retainer 429. Moreover, the first lens element 411 is the hybrid lens element, the second lens element 412 is an adjacent lens element of the first lens element 411, and the second lens element 412, the third lens element 413, the fourth lens element 414, the fifth lens element 415, the sixth lens element 416, the seventh lens element 417, the eighth lens element 418, the first light-blocking element 421, the second light-blocking element 422, the third light-blocking element 423, the fourth light-blocking element 424, the fifth light-blocking element 425, the first spacer 426, the sixth light-blocking element 427, the second spacer 428 and the retainer 429 are the optical elements.

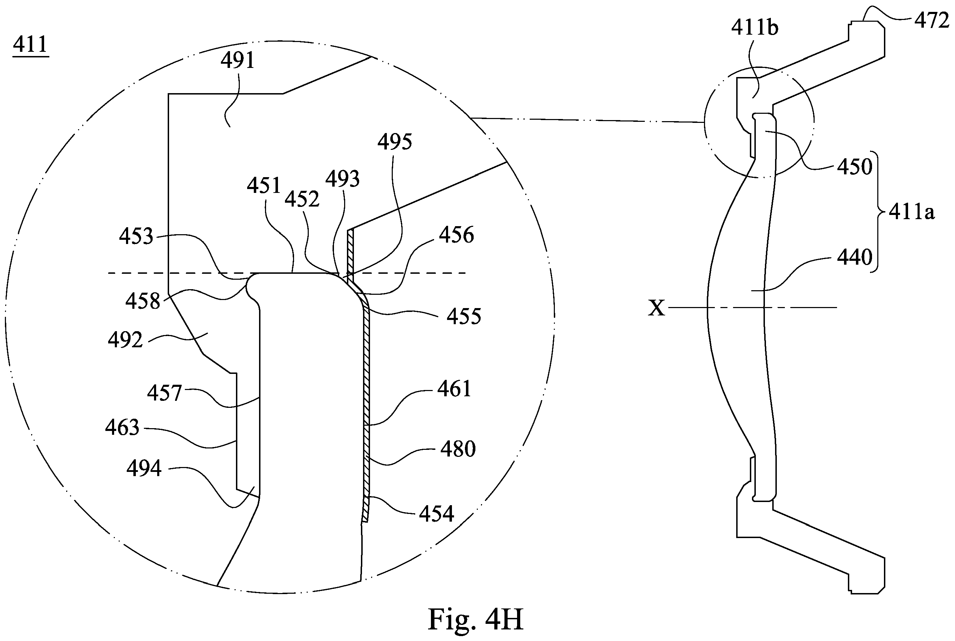

Fig. 4H is a schematic view of the first lens element 411 according to the 4th example in Fig. 4G. In Figs. 4C and 4H, the first lens element 411 includes a glass main body 411a and a plastic frame 411b, and the glass main body 411a has the optical axis X, wherein the glass main body 411a includes an optical portion 440 and a peripheral portion 450, and the plastic frame 411b includes an outer annular portion 491, a first extending portion 492 and a second extending portion 493. In detail, the first light-blocking element 421 is disposed on the plastic frame 411b of the first lens element 411.

Moreover, the optical axis X passes through the optical portion 440, the peripheral portion 450 is away from the optical axis X from the optical portion 440, and the peripheral portion 450 includes a cylindrical surface 451, a first arc surface 452, a brim surface 453 and a connecting surface 454, wherein the cylindrical surface 451 is configured to define an outer diameter of the glass main body 411a, and the cylindrical surface 451 extends along a direction parallel to the optical axis X. The first arc surface 452 is connected to the cylindrical surface 451, and the first arc surface 452 extends from the cylindrical surface 451 towards a direction close to the optical axis X. The brim surface 453 and the first arc surface 452 are disposed relatively to the cylindrical surface 451, and the brim surface 453 extends and protrudes from the cylindrical surface 451 towards a direction away from the first arc surface 452. The connecting surface 454 is gradually close to the optical axis X from the first arc surface 452 towards a direction away from the brim surface 453, and the connecting surface 454 is connected to the optical portion 440.

In Fig. 4H, the plastic frame 411b can be made of opaque plastic material, wherein the outer annular portion 491 surrounds and is adjacent to the cylindrical surface 451, the first extending portion 492 and the second extending portion 493 extend from the outer annular portion 491 towards two sides of the cylindrical surface 451 in a direction away from the outer annular portion 491, a first tip 494 and a second tip 495 are formed on a surface of the glass main body 411a, respectively, and the first tip 494 is closer to the optical axis X than the second tip 495 to the optical axis X.

The connecting surface 454 can include a second arc surface 455 and a transition surface 456, wherein the transition surface 456 is smooth connected to the first arc surface 452 and the second arc surface 455, the second arc surface 455 is near to a side of the first arc surface 452 away from the cylindrical surface 451, the second arc surface 455 extends from the first arc surface 452 towards the direction close to the optical axis X, and the plastic frame 411b is simultaneously and directly contacted with the first arc surface 452 and the second arc surface 455. The stability of the plastic frame 411b can be further enhanced via the disposition of the first arc surface 452 and the second arc surface 455.

The plastic frame 411b can further include an intermediate surface 457 directly contacted with the glass main body 411a.

In Fig. 4H, the peripheral portion 450 can further include an arc end 458 formed on a side of the brim surface 453 away from the first arc surface 452.

In Figs. 4C and 4H, the peripheral portion 450 can further include a first platform surface 461 vertical to the cylindrical surface 451, the first platform surface 461 is disposed on a side corresponding to the second tip 495, the first platform surface 461 is closer to the optical axis X than the second tip 495 to the optical axis X, and the lens carrier 430 is directly contacted with the first platform surface 461.

In Figs. 4C and 4H, the plastic frame 411b can further include a plastic platform surface 463, wherein the plastic platform surface 463 is relative to the first platform surface 461, the first platform surface 461 is parallel to the plastic platform surface 463, and a parallelism between the first platform surface 461 and the plastic platform surface 463 is not larger than 0.05 mm.

The plastic frame 411b of the first lens element 411 can further include a disposing structure 472, wherein the lens carrier 430 is disposed on the disposing structure 472, and the plastic frame 411b and the lens carrier 430 can be assembled by bonding.

The first lens element 411 can further include an anti-reflecting layer 480 disposed on the glass main body 411a and the plastic frame 411b. Therefore, the reflection of the plastic frame 411b can be further reduced so as to optimize the optical quality, and the surface thereof can have the lower reflectivity. According to the 4th example, the anti-reflecting layer 480 is the light-blocking coating.

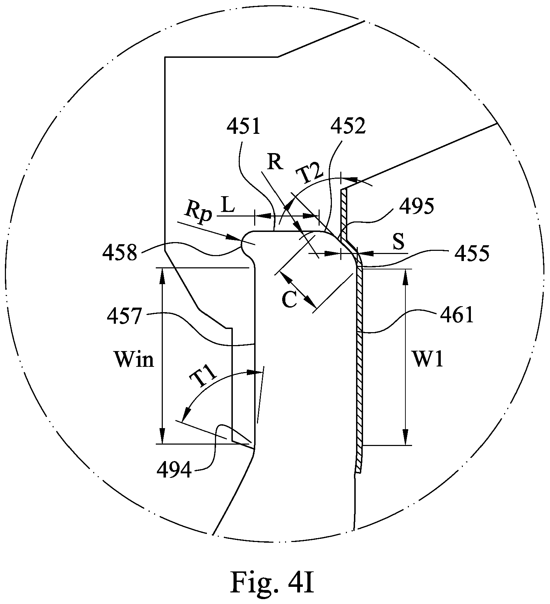

Fig. 4I is a partial enlarged view of the first lens element 411 according to the 4th example in Fig. 4H. In Figs. 4H and 4I, when on a cross section parallel to and passing through the optical axis X, a radius of curvature of the first arc surface 452 is R, a length of the cylindrical surface 451 is L, a distance between a side of the first arc surface 452 close to the cylindrical surface 451 and a side of the second arc surface 455 away from the cylindrical surface 451 is C, an angle of the first tip 494 is T1, and an angle of the second tip 495 is T2; on a direction vertical to the optical axis X, a width of the first platform surface 461 is W1, and a width of the intermediate surface 457 is Win; a radius of curvature of the arc end 458 is Rp, and a distance between the first platform surface 461 and the second tip 495 on the direction parallel to the optical axis X is S, the following conditions of Table 4 are satisfied.

| Table 4, the 4th example | | | |
|---|---|---|---|
| R (mm) | 0.15 | T2 (degree) | 45 |
| L (mm) | 0.24 | Win (mm) | 0.66 |
| C (mm) | 0.2 | S (mm) | 0.06 |
| W1 (mm) | 0.66 | R/L | 0.625 |
| Rp (mm) | 0.2 | L/W1 | 0.364 |
| T1 (degree) | 76 | L/Win | 0.364 |

<5th example>

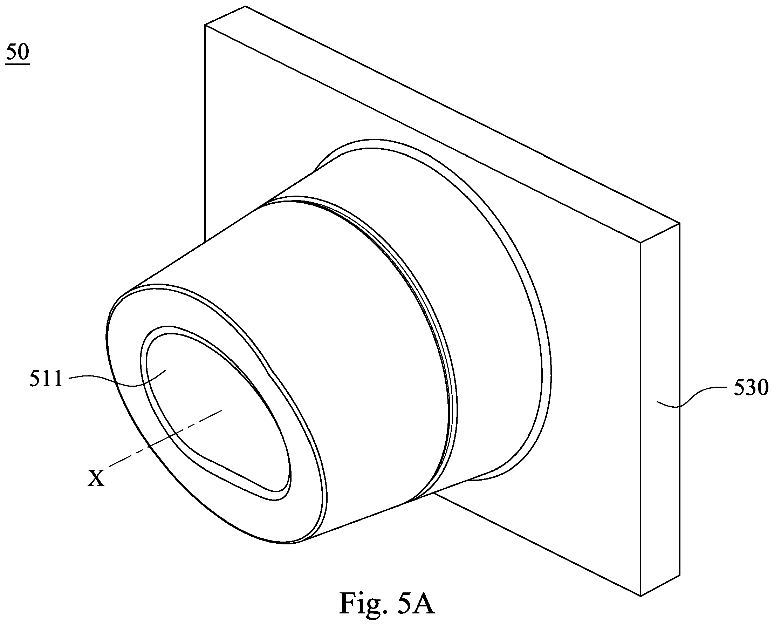

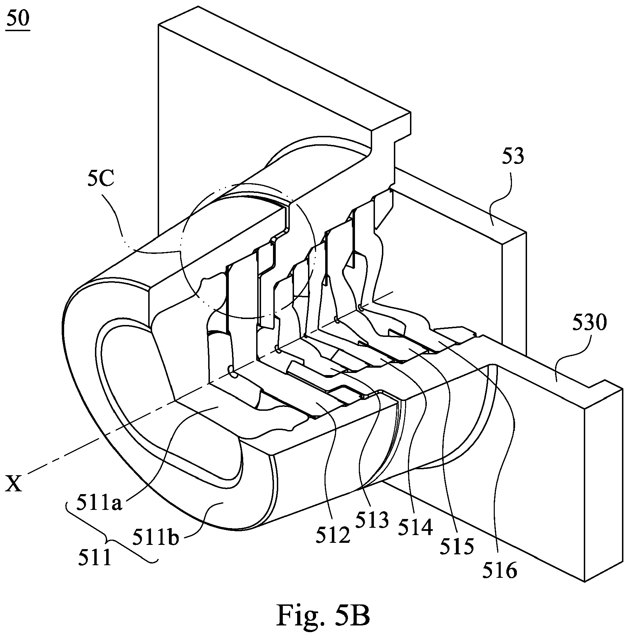

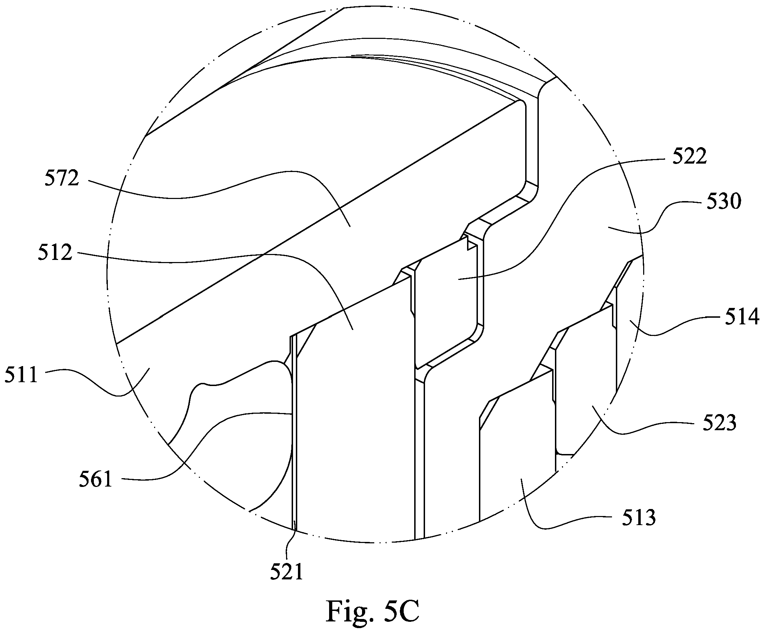

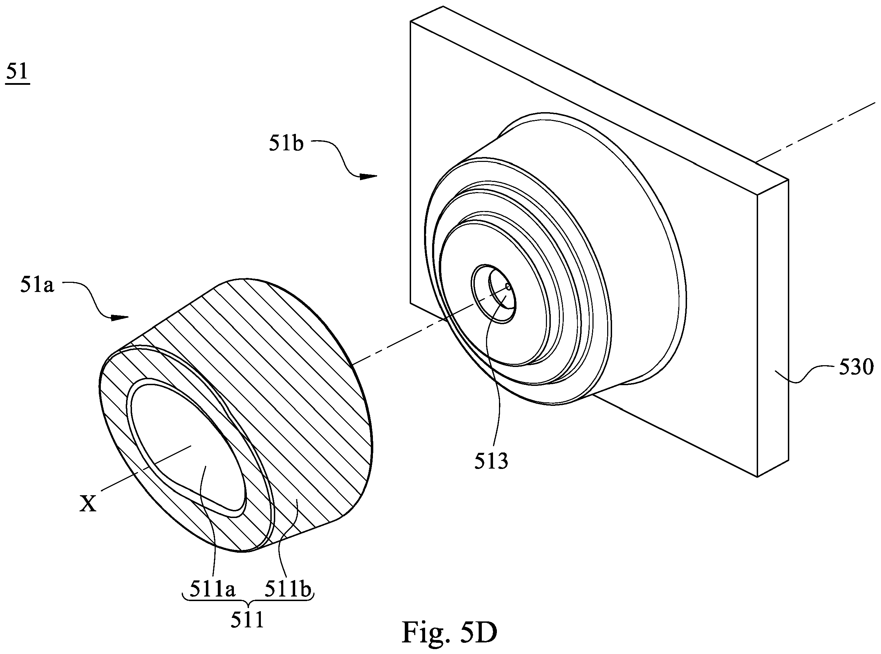

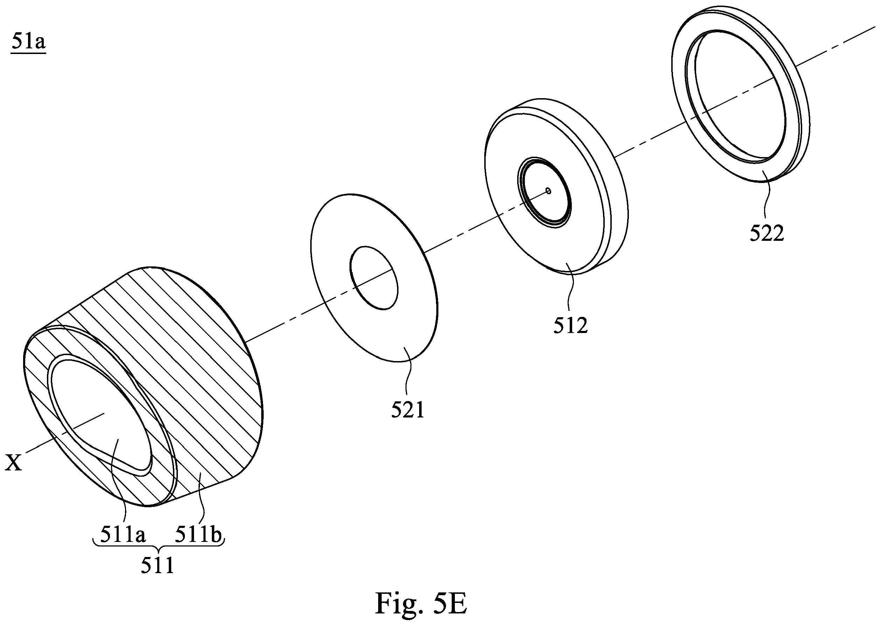

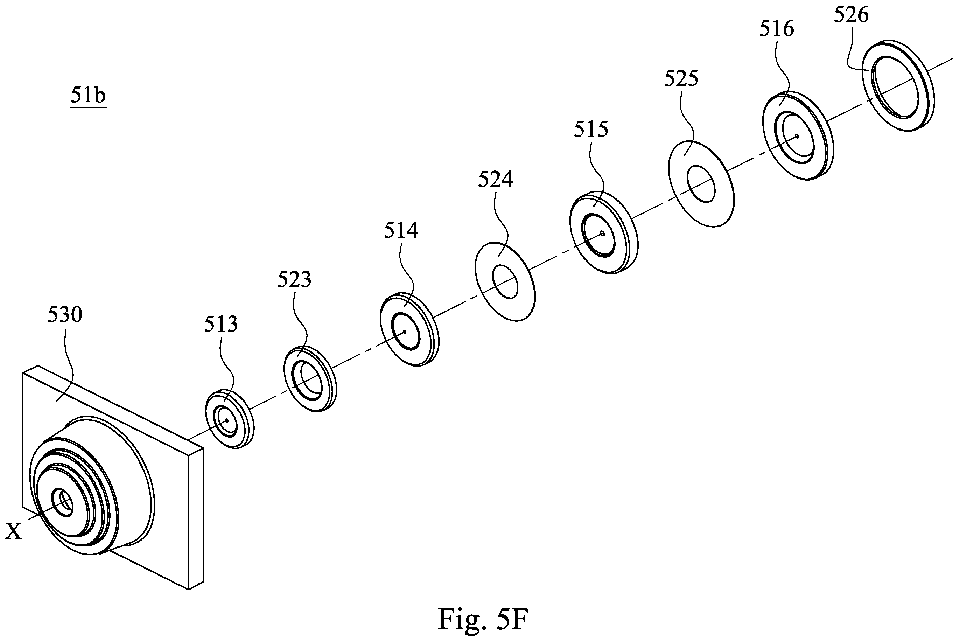

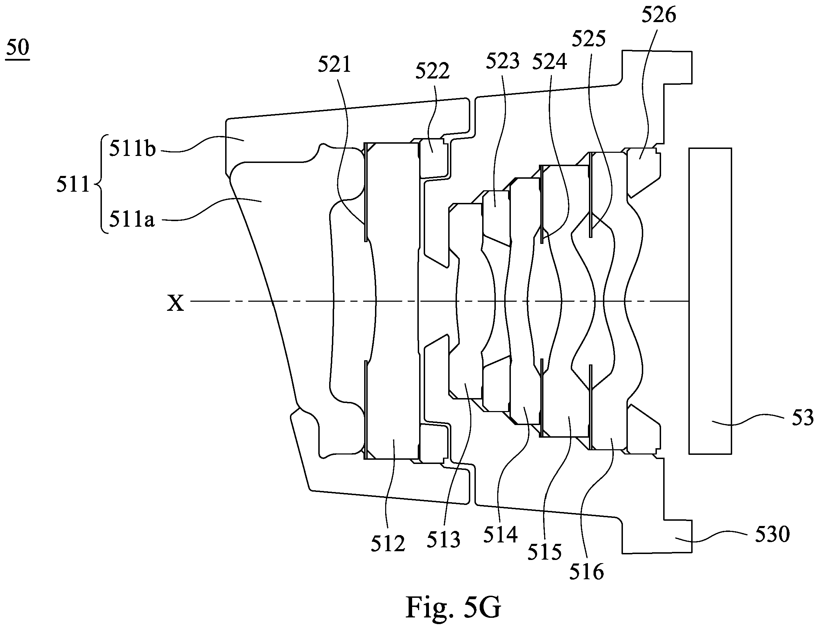

Fig. 5A is a three-dimensional view of an image capturing apparatus 50 according to the 5th example of the present disclosure. Fig. 5B is a partial cross-sectional view of the image capturing apparatus 50 according to the 5th example in Fig. 5A. Fig. 5C is a partial exploded view of the image capturing apparatus 50 according to the 5th example in Fig. 5B. Fig. 5D is an exploded view of an imaging lens assembly 51 according to the 5th example in Fig. 5A. Fig. 5E is an exploded view of a first lens group 51a according to the 5th example in Fig. 5A. Fig. 5F is an exploded view of a second lens group 51b according to the 5th example in Fig. 5A. Fig. 5G is a schematic view of the image capturing apparatus 50 according to the 5th example in Fig. 5A. In Figs. 5A to 5G, the image capturing apparatus 50 includes the imaging lens assembly 51 and an image sensor 53, wherein the image sensor 53 is disposed on an image surface (its reference numeral is omitted) of the imaging lens assembly 51.

In Figs. 5B to 5G, the imaging lens assembly 51 includes a hybrid lens element, at least one optical element and a lens carrier 530, wherein the optical element is disposed along an optical axis X, and the hybrid lens element and the optical element are disposed on the lens carrier 530. In particular, the imaging lens assembly 51 includes the first lens group 51a and the second lens group 51b, wherein the first lens group 51a, in order from an object side to an image side, includes a first lens element 511, a first light-blocking element 521, a second lens element 512 and a first retainer 522, and the second lens group 51b, in order from an object side to an image side, includes a third lens element 513, a spacer 523, a fourth lens element 514, a second light-blocking element 524, a fifth lens element 515, a third light-blocking element 525, a sixth lens element 516 and a second retainer 526. Moreover, the first lens element 511 is the hybrid lens element, the second lens element 512 is an adjacent lens element of the first lens element 511, and the second lens element 512, the third lens element 513, the fourth lens element 514, the fifth lens element 515, the sixth lens element 516, the first light-blocking element 521, the first retainer 522, the spacer 523, the second light-blocking element 524, the third light-blocking element 525 and the second retainer 526 are the optical elements.

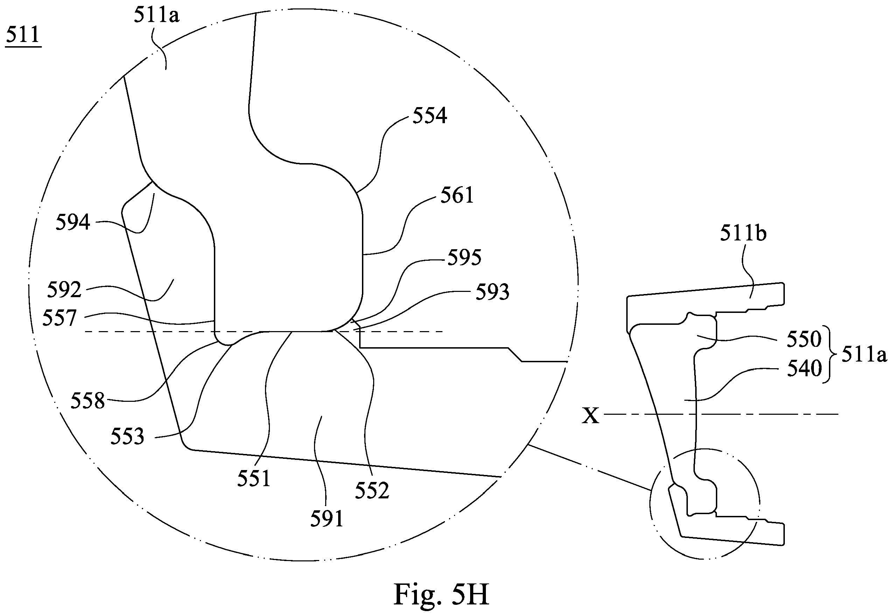

Fig. 5H is a schematic view of the first lens element 511 according to the 5th example in Fig. 5G. In Figs. 5B, 5G and 5H, the first lens element 511 includes a glass main body 511a and a plastic frame 511b, and the glass main body 511a has the optical axis X, wherein the glass main body 511a includes an optical portion 540 and a peripheral portion 550, and the plastic frame 511b includes an outer annular portion 591, a first extending portion 592 and a second extending portion 593. In detail, the second lens element 512, the first light-blocking element 521 and the first retainer 522 are disposed on the plastic frame 511b of the first lens element 511.

Moreover, the optical axis X passes through the optical portion 540, the peripheral portion 550 is away from the optical axis X from the optical portion 540, and the peripheral portion 550 includes a cylindrical surface 551, a first arc surface 552, a brim surface 553 and a connecting surface 554, wherein the cylindrical surface 551 is configured to define an outer diameter of the glass main body 511a, and the cylindrical surface 551 extends along a direction parallel to the optical axis X. The first arc surface 552 is connected to the cylindrical surface 551, and the first arc surface 552 extends from the cylindrical surface 551 towards a direction close to the optical axis X. The brim surface 553 and the first arc surface 552 are disposed relatively to the cylindrical surface 551, and the brim surface 553 extends and protrudes from the cylindrical surface 551 towards a direction away from the first arc surface 552. The connecting surface 554 is gradually close to the optical axis X from the first arc surface 552 towards a direction away from the brim surface 553, and the connecting surface 554 is connected to the optical portion 540.

In Fig. 5H, the plastic frame 511b can be made of opaque plastic material, wherein the outer annular portion 591 surrounds and is adjacent to the cylindrical surface 551, the first extending portion 592 and the second extending portion 593 extend from the outer annular portion 591 towards two sides of the cylindrical surface 551 in a direction away from the outer annular portion 591, a first tip 594 and a second tip 595 are formed on a surface of the glass main body 511a, respectively, and the first tip 594 is closer to the optical axis X than the second tip 595 to the optical axis X.

The plastic frame 511b can further include an intermediate surface 557 directly contacted with the glass main body 511a.

In Fig. 5H, the peripheral portion 550 can further include an arc end 558 formed on a side of the brim surface 553 away from the first arc surface 552.

In Figs. 5C and 5H, the peripheral portion 550 can further include a first platform surface 561 vertical to the cylindrical surface 551, the first platform surface 561 is disposed on a side corresponding to the second tip 595, the first platform surface 561 is closer to the optical axis X than the second tip 595 to the optical axis X, and the first light-blocking element 521 is directly contacted with the first platform surface 561.

In Fig. 5C, the plastic frame 511b of the first lens element 511 can further include a disposing structure 572, wherein the first retainer 522 and the lens carrier 530 are disposed on the disposing structure 572, the first retainer 522 and the plastic frame 511b can be assembled by bonding, and the lens carrier 530 and the plastic frame 511b can be assembled by bonding. The cooperation between the elements can be enhanced by disposing the first retainer 522 on the disposing structure 572, so that the optical quality can be ensured. Further, the first lens element 511 and the first retainer 522 can be preassembled via the disposing structure 572 so as to enhance the production efficiency.

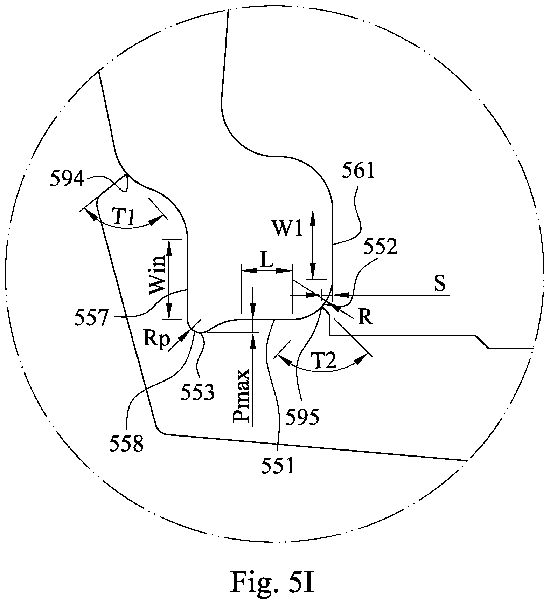

Fig. 5I is a partial enlarged view of the first lens element 511 according to the 5th example in Fig. 5H. In Figs. 5H and 5I, when on a cross section parallel to and passing through the optical axis X, a radius of curvature of the first arc surface 552 is R, a length of the cylindrical surface 551 is L, an angle of the first tip 594 is T1, and an angle of the second tip 595 is T2; on a direction vertical to the optical axis X, a maximum distance between the brim surface 553 and the cylindrical surface 551 is Pmax, a width of the first platform surface 561 is W1, and a width of the intermediate surface 557 is Win; a radius of curvature of the arc end 558 is Rp, and a distance between the first platform surface 561 and the second tip 595 on the direction parallel to the optical axis X is S, the following conditions of Table 5 are satisfied.

| Table 5, the 5th example | | | |
|---|---|---|---|
| R (mm) | 0.15 | T2 (degree) | 48 |
| L (mm) | 0.255 | Win (mm) | 0.169 |
| W1 (mm) | 0.253 | S (mm) | 0.05 |
| Rp (mm) | 0.2 | R/L | 0.588 |
| Pmax (mm) | 0.05 | L/W1 | 1.008 |
| T1 (degree) | 30 | L/Win | 1.509 |

<6th example>

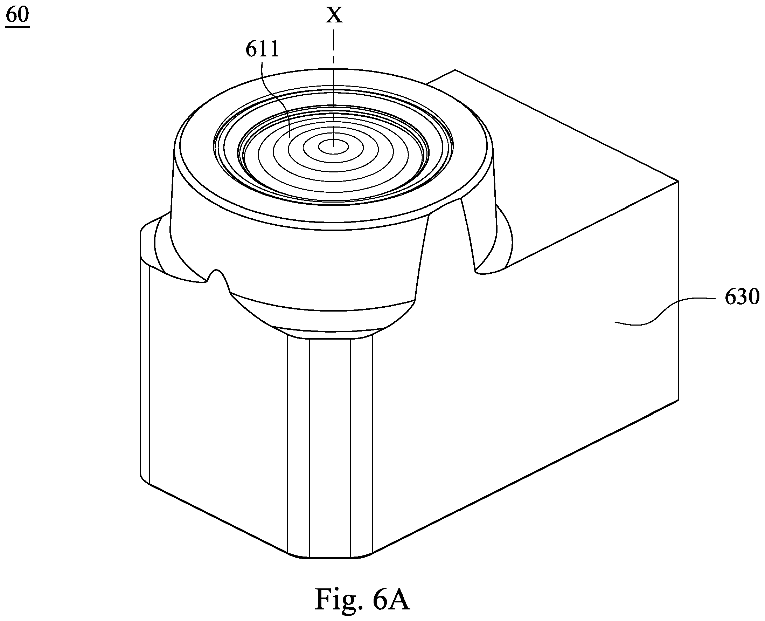

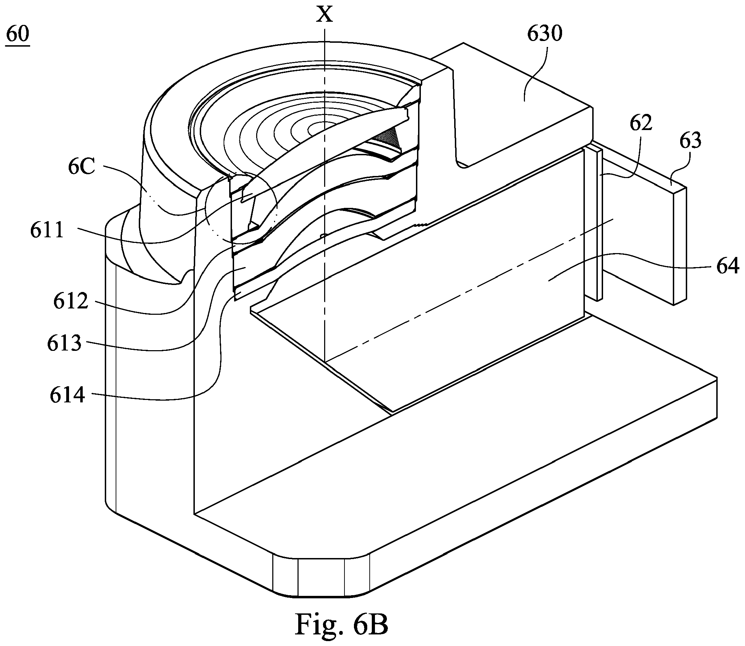

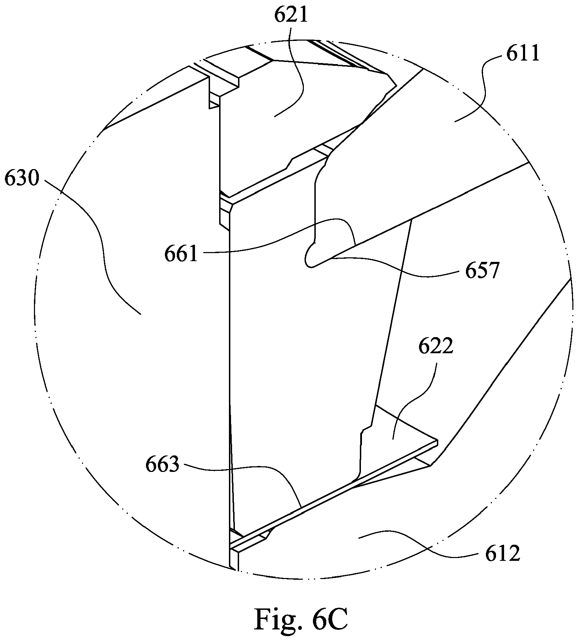

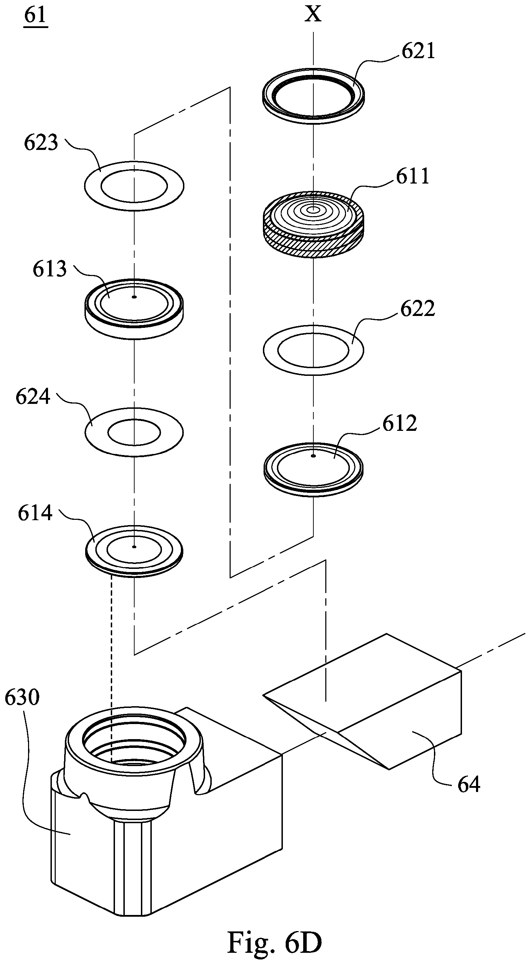

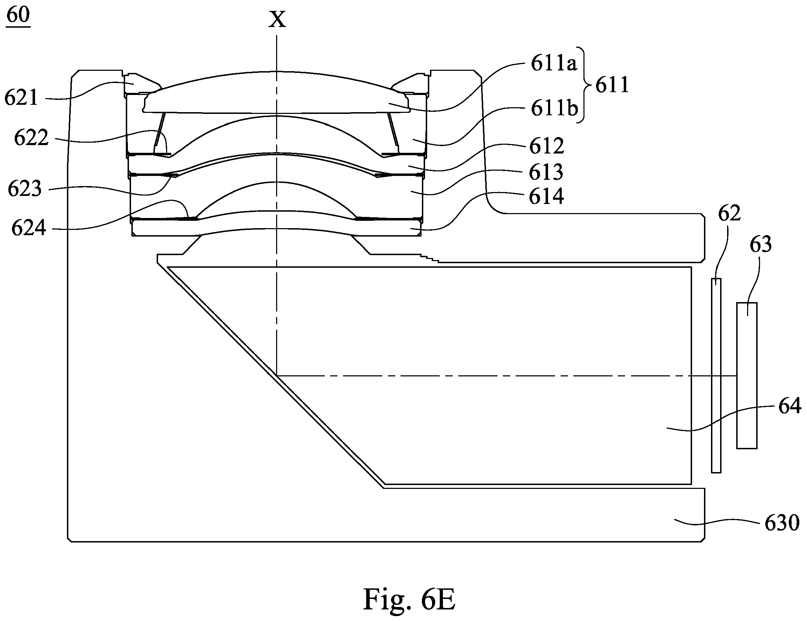

Fig. 6A is a three-dimensional view of an image capturing apparatus 60 according to the 6th example of the present disclosure. Fig. 6B is a partial cross-sectional view of the image capturing apparatus 60 according to the 6th example in Fig. 6A. Fig. 6C is a partial enlarged view of the image capturing apparatus 60 according to the 6th example in Fig. 6B. Fig. 6D is an exploded view of an imaging lens assembly 61 according to the 6th example in Fig. 6A. Fig. 6E is a schematic view of the image capturing apparatus 60 according to the 6th example in Fig. 6A. In Figs. 6A to 6E, the image capturing apparatus 60 includes an imaging lens assembly 61, a plate element 62 and an image sensor 63, wherein the plate element 62 is disposed on an image side of the imaging lens assembly 61, and the image sensor 63 is disposed on an image surface (its reference numeral is omitted) of the imaging lens assembly 61.

In Figs. 6B, 6D and 6E, the imaging lens assembly 61 includes a hybrid lens element, at least one optical element and a lens carrier 630, wherein the optical element is disposed along the optical axis X, and the hybrid lens element and the optical element are disposed on the lens carrier 630. In particular, the imaging lens assembly 61, in order from an object side to the image side, includes a retainer 621, a first lens element 611, a first light-blocking element 622, a second lens element 612, a second light-blocking element 623, a third lens element 613, a third light-blocking element 624, a fourth lens element 614 and a reflecting element 64, wherein the first lens element 611 is the hybrid lens element, the second lens element 612 is an adjacent lens element of the first lens element 611, and the second lens element 612, the third lens element 613, the fourth lens element 614, the retainer 621, the first light-blocking element 622, the second light-blocking element 623, the third light-blocking element 624 and the reflecting element 64 are the optical elements.

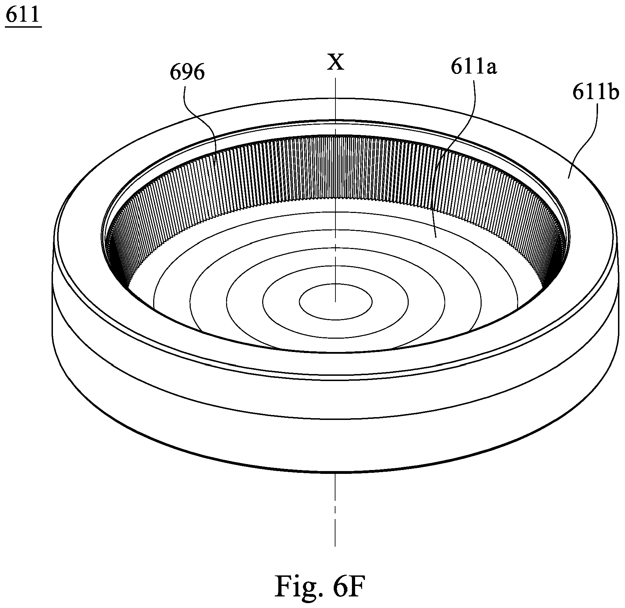

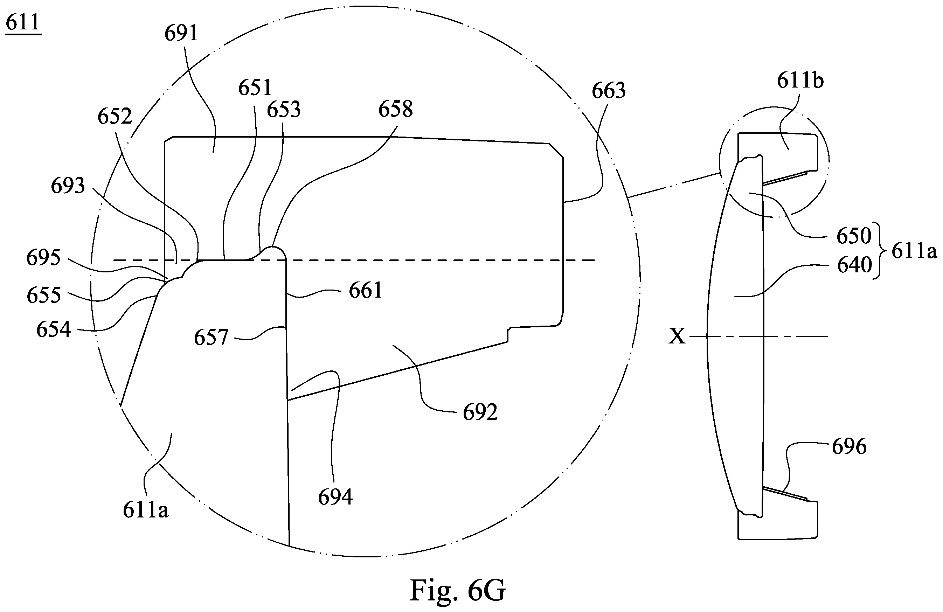

Fig. 6F is a three-dimensional view of the first lens element 611 according to the 6th example in Fig. 6A. Fig. 6G is a schematic view of the first lens element 611 according to the 6th example in Fig. 6F. In Figs. 6C, 6F and 6G, the first lens element 611 includes a glass main body 611a and a plastic frame 611b, and the glass main body 611a has the optical axis X, wherein the glass main body 611a includes an optical portion 640 and a peripheral portion 650, and the plastic frame 611b includes an outer annular portion 691, a first extending portion 692 and a second extending portion 693.

In Fig. 6G, the optical axis X passes through the optical portion 640, the peripheral portion 650 is away from the optical axis X from the optical portion 640, and the peripheral portion 650 includes a cylindrical surface 651, a first arc surface 652, a brim surface 653 and a connecting surface 654, wherein the cylindrical surface 651 is configured to define an outer diameter of the glass main body 611a, and the cylindrical surface 651 extends along a direction parallel to the optical axis X. The first arc surface 652 is connected to the cylindrical surface 651, and the first arc surface 652 extends from the cylindrical surface 651 towards a direction close to the optical axis X. The brim surface 653 and the first arc surface 652 are disposed relatively to the cylindrical surface 651, and the brim surface 653 extends and protrudes from the cylindrical surface 651 towards a direction away from the first arc surface 652. The connecting surface 654 is gradually close to the optical axis X from the first arc surface 652 towards a direction away from the brim surface 653, and the connecting surface 654 is connected to the optical portion 640.

The plastic frame 611b can be made of opaque plastic material, wherein the outer annular portion 691 surrounds and is adjacent to the cylindrical surface 651, the first extending portion 692 and the second extending portion 693 extend from the outer annular portion 691 towards two sides of the cylindrical surface 651 in a direction away from the outer annular portion 691, a first tip 694 and a second tip 695 are formed on a surface of the glass main body 611a, respectively, and the first tip 694 is closer to the optical axis X than the second tip 695 to the optical axis X.

The connecting surface 654 can include a second arc surface 655, wherein the second arc surface 655 is near to a side of the first arc surface 652 away from the cylindrical surface 651, the second arc surface 655 extends from the first arc surface 652 towards the direction close to the optical axis X, and the plastic frame 611b is simultaneously and directly contacted with the first arc surface 652 and the second arc surface 655.

The plastic frame 611b can further include an intermediate surface 657 directly contacted with the glass main body 611a.

The peripheral portion 650 can further include an arc end 658 formed on a side of the brim surface 653 away from the first arc surface 652.

In Figs. 6C and 6G, the peripheral portion 650 can further include a first platform surface 661 vertical to the cylindrical surface 651, the first platform surface 661 is disposed on a side corresponding to the second tip 695, and the first platform surface 661 is closer to the optical axis X than the second tip 695 to the optical axis X.

The plastic frame 611b can further include a plastic platform surface 663, wherein the plastic platform surface 663 is relative to the first platform surface 661, the first platform surface 661 is parallel to the plastic platform surface 663, and a parallelism between the first platform surface 661 and the plastic platform surface 663 is not larger than 0.05 mm.

In Figs. 6F and 6G, the plastic frame 611b can further include an inner lateral 696 disposed on an image side of the first lens element 611 and gradually expanding from the image side of the first lens element 611 towards a direction away from an object side and the optical portion 640. Moreover, the inner lateral 696 includes a plurality of grooves adjacently arranged in a direction around the optical axis X and extending along the optical axis X.

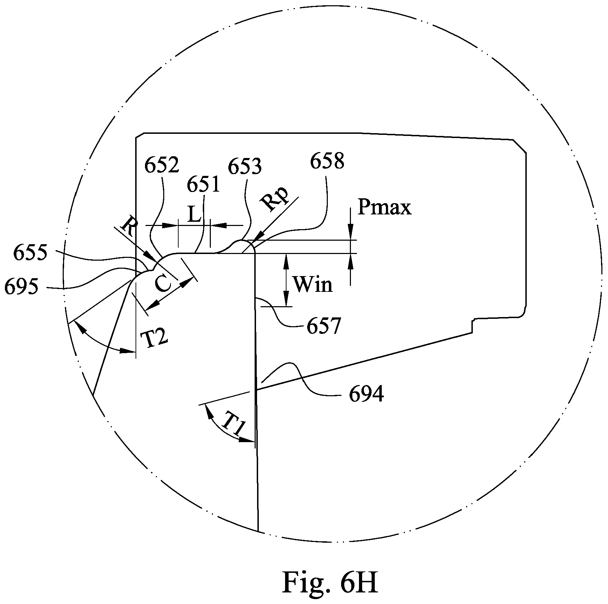

Fig. 6H is a partial enlarged view of the first lens element 611 according to the 6th example in Fig. 6G. In Figs. 6G and 6H, when on a cross section parallel to and passing through the optical axis X, a radius of curvature of the first arc surface 652 is R, a length of the cylindrical surface 651 is L, a distance between a side of the first arc surface 652 close to the cylindrical surface 651 and a side of the second arc surface 655 away from the cylindrical surface 651 is C, an angle of the first tip 694 is T1, and an angle of the second tip 695 is T2; on a direction vertical to the optical axis X, a maximum distance between the brim surface 653 and the cylindrical surface 651 is Pmax, and a width of the intermediate surface 657 is Win; a radius of curvature of the arc end 658 is Rp, the following conditions of Table 6 are satisfied.

| Table 6, the 6th example | | | |
|---|---|---|---|
| R (mm) | 0.1 | T2 (degree) | 55 |
| L (mm) | 0.12 | Win (mm) | 0.2 |
| C (mm) | 0.224 | Pmax (mm) | 0.05 |
| Rp (mm) | 0.05 | R/L | 0.833 |
| T1 (degree) | 75 | L/Win | 0.6 |

<7th example>

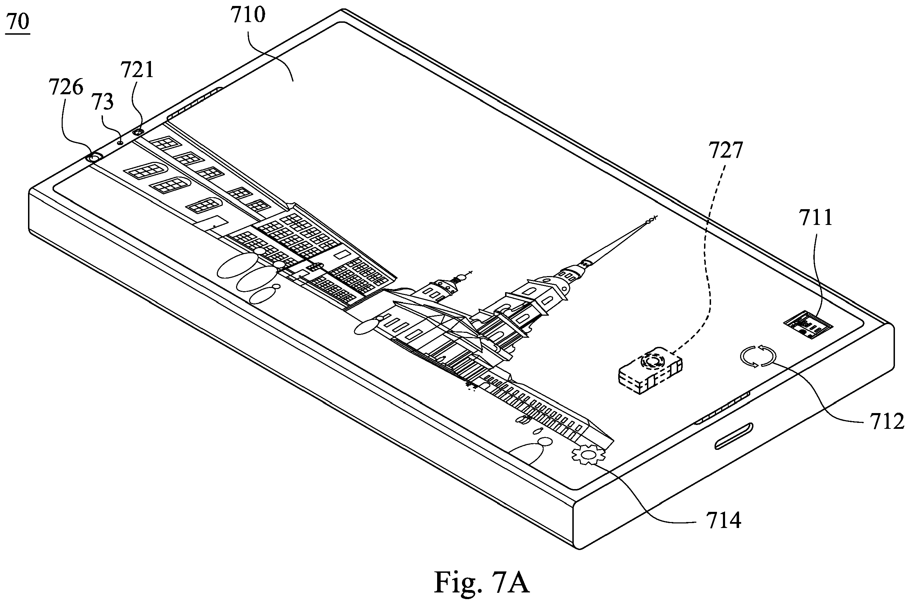

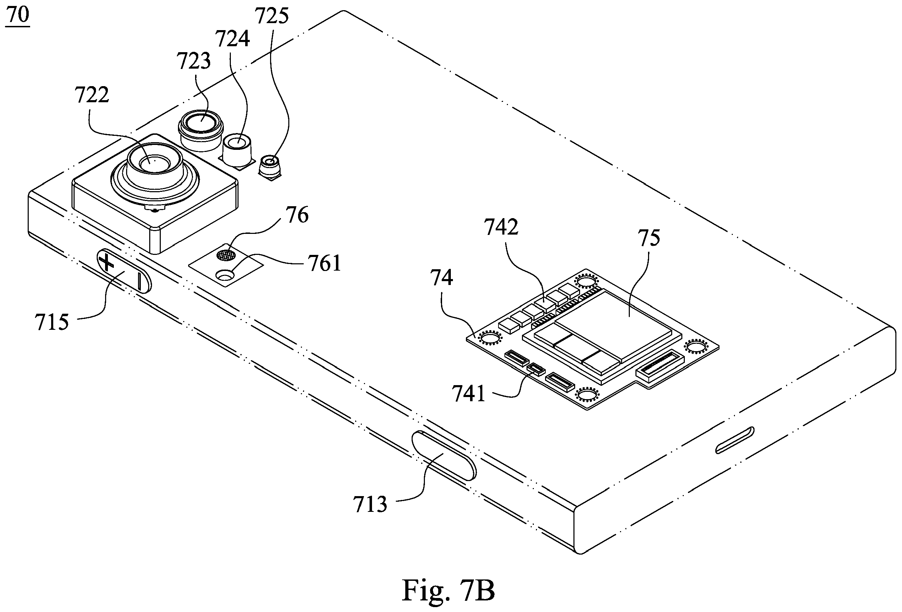

Fig. 7A is a three-dimensional view of an electronic device 70 according to the 7th example of the present disclosure. Fig. 7B is a perspective view of the electronic device 70 according to the 7th example in Fig. 7A. In Figs. 7A and 7B, the electronic device 70 is a smart phone, wherein the electronic device 70 can also be a laptop, a tablet and a driving recorder, but the present disclosure is not limited thereto. The electronic device 70 includes image capturing apparatuses, wherein each of the image capturing apparatuses can be the image capturing apparatus according to the aforementioned 1st example to the 6th example, but the present disclosure is not limited thereto.

According to the 7th example, the image capturing apparatuses are a front image capturing apparatus 721, a wide angle image capturing apparatus 722, a telephoto image capturing apparatus 723, a ultra-wide angle image capturing apparatus 724, a macro image capturing apparatus 725, a Time-Of-Flight (TOF) module 726 and a biometric sensor 727, wherein the TOF module 726 and the biometric sensor 727 can be another image capturing apparatuses with other functions, but the disposition is not limited thereto.

In detail, according to the 7th example, the front image capturing apparatus 721, the TOF module 726 and the biometric sensor 727 are disposed on a front of the electronic device 70, and the wide angle image capturing apparatus 722, the telephoto image capturing apparatus 723, the ultra-wide angle image capturing apparatus 724 and the macro image capturing apparatus 725 are disposed on a back of the electronic device 70.

The imaging control interface 710 can be a touch screen for displaying the scene and having the touch function, and the shooting angle can be manually adjusted. In detail, the imaging control interface 710 includes an image replay button 711, an image capturing apparatus switching button 712, a focus capturing button 713, an integrated menu button 714 and a zoom control button 715. Furthermore, users enter a shooting mode via the imaging control interface 710 of the electronic device 70, the image capturing apparatus switching button 712 can be flexibly configured to switch one of the front image capturing apparatus 721, the wide angle image capturing apparatus 722, the telephoto image capturing apparatus 723, the ultra-wide angle image capturing apparatus 724 and the macro image capturing apparatus 725 to capture the image, the zoom control button 715 is configured to adjust the zoom, the users use the focus capturing button 713 to undergo image capturing after capturing the images and confirming one of the front image capturing apparatus 721, the wide angle image capturing apparatus 722, the telephoto image capturing apparatus 723, the ultra-wide angle image capturing apparatus 724 and the macro image capturing apparatus 725, the users can view the images by the image replay button 711 after undergoing image capturing, and the integrated menu button 714 is configured to adjust the details of the image capturing (such as timed photo, photo ratio, and etc.).

The electronic device 70 can further include a reminding light 73, and the reminding light 73 is disposed on the front of the electronic device 70 and can be configured to remind the users of unread messages, missed calls and the condition of the phone.

Moreover, after entering the shooting mode via the imaging control interface 710 of the electronic device 70, the imaging light is gathered on the image sensor via the image capturing apparatus, and an electronic signal about an image is output to an image signal processor (ISP) (its reference numeral is omitted) of a single chip system 75. The single chip system 75 can further include a random access memory (RAM) (its reference numeral is omitted), a central processing unit (its reference numeral is omitted) and a storage unit (its reference numeral is omitted). Also, the single chip system 75 can further include, but not be limited to, a display, a control unit, a read-only memory (ROM), or the combination thereof.

Further, the electronic device 70 can further include an image software processor and an image signal processor, and further integrates the image software processor, the image signal processor, a position locator, a transmit signal processor, a gyroscope, a storage unit and a random access memory in the single chip system 75.

To meet a specification of the electronic device 70, the electronic device 70 can further include an optical anti-shake mechanism (not shown). Furthermore, the electronic device 70 can further include at least one focusing assisting module 76 and at least one sensing element (not shown). The focusing assisting module 76 can include a flash module 761 for compensating a color temperature, an infrared distance measurement component (not shown), a laser focus module (not shown), etc. The sensing element can have functions for sensing physical momentum and kinetic energy, such as an accelerator, a gyroscope, a Hall Effect Element, a position locator, a signal transmitter module, to sense shaking or jitters applied by hands of the user or external environments. Accordingly, the electronic device 70 equipped with an auto-focusing mechanism and the optical anti-shake mechanism can be enhanced to achieve the superior image quality. Furthermore, the electronic device 70 according to the present disclosure can have a capturing function with multiple modes, such as taking optimized selfies, high dynamic range (HDR) under a low light condition, 4K resolution recording, etc. Furthermore, the users can visually see a captured image of the camera through the imaging control interface 710 and manually operate the view finding range on the imaging control interface 710 to achieve the autofocus function of what you see is what you get.

Moreover, the image capturing apparatus, the optical anti-shake mechanism, the sensing element, the focusing assisting module 76 and an electronic element 742 can be disposed on a circuit board 74 and electrically connected to the associated components via a connector 741 to perform a capturing process, wherein the circuit board 74 can be a flexible printed circuit board (FPC). Since the current electronic devices, such as smart phones, have a tendency of being compact, the way of firstly disposing the image capturing apparatus and related components on the flexible printed circuit board and secondly integrating the circuit thereof into the main board of the electronic device via the connector can satisfy the requirements of the mechanical design and the circuit layout of the limited space inside the electronic device, and obtain more margins. The autofocus function of the image capturing apparatus can also be controlled more flexibly via the touch screen of the electronic device. According to the 7th example, the sensing element and the focusing assisting module 76 are disposed on the circuit board 74 and at least one other flexible printed circuit board (not shown) and electrically connected to the associated components, such as the image signal processor, via corresponding connectors to perform the capturing process. In other examples (not shown), the sensing elements and the focusing assisting modules can also be disposed on the main board of the electronic device or carrier boards of other types according to requirements of the mechanical design and the circuit layout.

Moreover, the image of the certain range with the high resolution can be captured via the wide angle image capturing apparatus 722, and the wide angle image capturing apparatus 722 has the function of the high resolution and the low deformation. Comparing with the image captured via the wide angle image capturing apparatus 722, the image captured via the telephoto image capturing apparatus 723 has narrower visual angle and narrower depth of field. Hence, the telephoto image capturing apparatus 723 can be configured to capture the moving targets, that is, the telephoto image capturing apparatus 723 can be driven via an actuator (not shown) of the electronic device 70 to quick and continuous auto focus the moving targets so as to make the image of the moving targets is not fuzzy owing to defocus. Comparing with the image captured via the wide angle image capturing apparatus 722, the image captured via the ultra-wide angle image capturing apparatus 724 has wider visual angle and wider depth of field, but the image captured via the ultra-wide angle image capturing apparatus 724 also has greater distortion.

In particular, the zooming function can be obtained via the electronic device 70, when the scene is captured via the image capturing apparatuses with different focal lengths cooperated with the function of image processing.

<8th example>

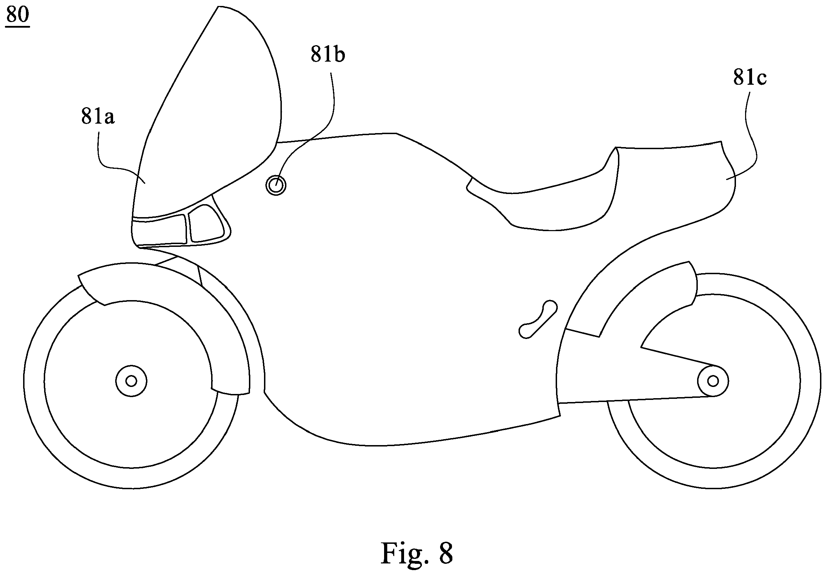

Fig. 8 is a schematic view of an electronic device applied to a motorcycle 80 according to the 8th example of the present disclosure. In Fig. 8, the electronic device (its reference numeral is omitted) includes image capturing apparatuses, wherein each of the image capturing apparatuses can be the image capturing apparatus according to the aforementioned 1st example to the 6th example, but the present disclosure is not limited thereto.

According to the 8th example, the image capturing apparatuses are a front image capturing apparatus 81a, a lateral image capturing apparatus 81b and a rear image capturing apparatus 81c.

In particular, the front image capturing apparatus 81a is disposed on a front end of the motorcycle 80, the lateral image capturing apparatus 81b is disposed on a side of the motorcycle 80, and the rear image capturing apparatus 81c is disposed on a rear end of the motorcycle 80. Therefore, the imaging information around the motorcycle 80 can be captured via the electronic device.

<9th example>

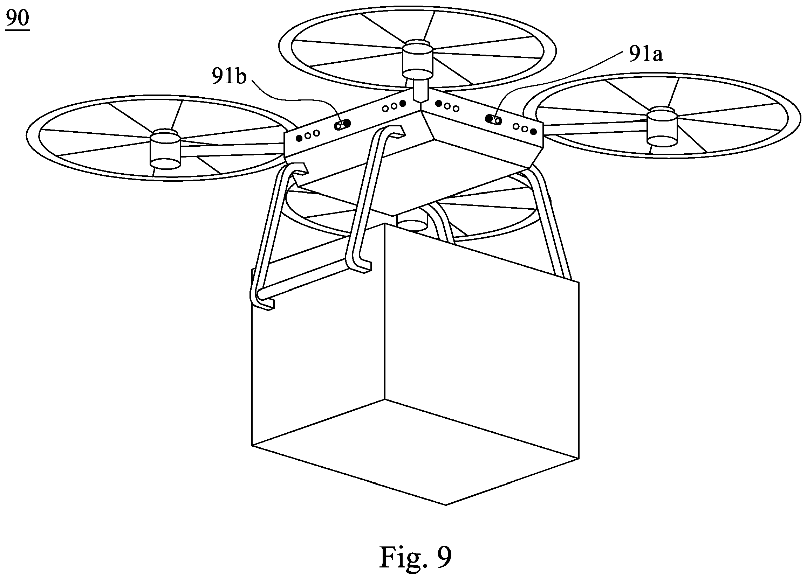

Fig. 9 is a schematic view of an electronic device applied to a drone 90 according to the 9th example of the present disclosure. In Fig. 9, the electronic device (its reference numeral is omitted) includes image capturing apparatuses, wherein each of the image capturing apparatuses can be the image capturing apparatus according to the aforementioned 1st example to the 6th example, but the present disclosure is not limited thereto.

According to the 9th example, the image capturing apparatuses are a front image capturing apparatus 91a and a lateral image capturing apparatus 91b.

In particular, the front image capturing apparatus 91a is disposed on a front end of the drone 90, and the lateral image capturing apparatus 91b is disposed on a side of the drone 90. Therefore, the electronic device can be configured to cope with the complicated environmental light.

<10th example>

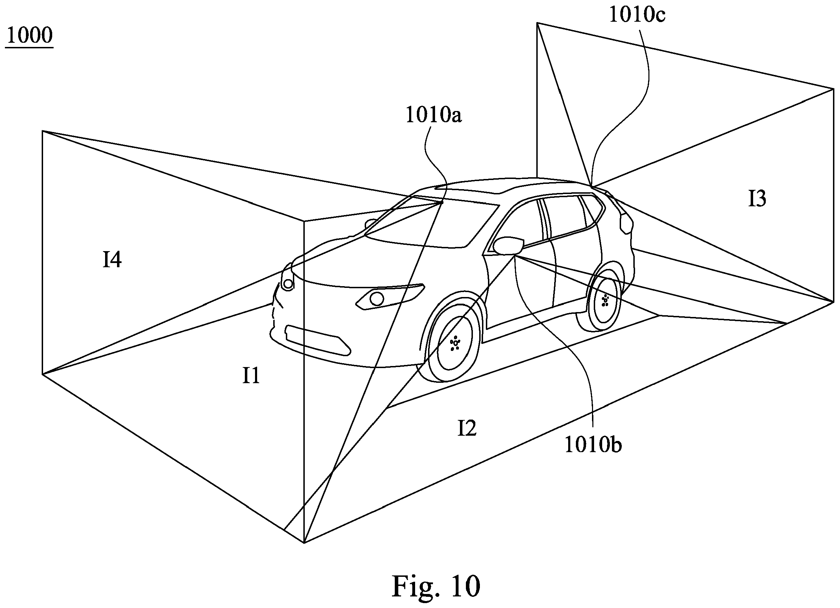

Fig. 10 is a schematic view of an electronic device applied to a car 1000 according to the 10th example of the present disclosure. In Fig. 10, the electronic device (its reference numeral is omitted) includes image capturing apparatuses, wherein each of the image capturing apparatuses can be the image capturing apparatus according to the aforementioned 1st example to the 6th example, but the present disclosure is not limited thereto.

According to the 10th example, the image capturing apparatuses are a front image capturing apparatus 1010a, a lateral image capturing apparatus 1010b and a rear image capturing apparatus 1010c.

In particular, the front image capturing apparatus 1010a, the lateral image capturing apparatus 1010b and the rear image capturing apparatus 1010c are disposed on a front end, a lateral and a rear end of the car 1000, respectively, so as to make for the drivers to obtain external space informations in addition to the car 1000, such as external space informations I1, I2, I3, I4, but the present disclosure is not limited thereto. Therefore, more visual angles can be provided to reduce the blind spot, so that the driving safety can be improved.

**Claims**

1. A glass lens element, having an optical axis (X), and **characterized in** comprising:

   an optical portion (140), the optical axis (X) passing through the optical portion (140); and
   a peripheral portion (150) away from the optical axis (X) from the optical portion (140), and the peripheral portion (150) comprising:

      a cylindrical surface (151) configured to define an outer diameter of the glass lens element, and the cylindrical surface (151) extending along the optical axis (X);
      a first arc surface (152) connected to the cylindrical surface (151), and the first arc surface (152) extending from the cylindrical surface (151) towards a direction close to the optical axis (X);
      a brim surface (153) and the first arc surface (152) disposed relatively to the cylindrical surface (151), and the brim surface (153) extending and protruding from the cylindrical surface (151) towards a direction away from the first arc surface (152); and
      a connecting surface (154) gradually close to the optical axis (X) from the first arc surface (152) towards a direction away from the brim surface (153), and the connecting surface (154) connected to the optical portion (140);

   wherein the peripheral portion (150) is smooth connected from the first arc surface (152) towards the brim surface (153);
   wherein on a cross section parallel to and passing through the optical axis (X), a radius of curvature of the first arc surface (152) is R, a length of the cylindrical surface (151) is L, and the following condition is satisfied:

$$0.01 \le R/L \le 9.85.$$

2. The glass lens element of claim 1, wherein on a direction vertical to the optical axis (X), a maximum distance between the brim surface (153) and the cylindrical surface (151) is Pmax, and the following condition is satisfied:

$$0.02 \text{ mm} \le Pmax \le 1.0 \text{ mm}.$$

3. The glass lens element of any of claims 1-2, wherein the peripheral portion (150) further comprises an arc end (157) formed on a side of the brim surface (153) away from the first arc surface (152), a radius of curvature of the arc end (157) is Rp, and the following condition is satisfied:

$$0.02 \text{ mm} \le Rp \le 0.5 \text{ mm}.$$

4. The glass lens element of any of claims 1-3, wherein the connecting surface (154) comprises a second arc surface (155) near to a side of the first arc surface (152) away from the cylindrical surface (151), and the second arc surface (155) extends from the first arc surface (152) towards the direction close to the optical axis (X);
   wherein on the cross section parallel to and passing through the optical axis (X), a distance between a side of the first arc surface (152) close to the cylindrical surface (151) and a side of the second arc surface (155) away from the cylindrical surface (151) is C, and the following condition is satisfied:

$$0.05 \text{ mm} \le C \le 1.13 \text{ mm}.$$

5. The glass lens element of any of claims 1-4, further comprising:

   a low-reflecting surface (170);
   wherein the connecting surface (154) further comprises a transition surface (156) smooth connected to the first arc surface (152) and the second arc surface (155), and the low-reflecting surface (170) is disposed on the transition surface (156).

6. The glass lens element of any of claims 1-5, further comprising:

a first platform surface (161) vertical to the cylindrical surface (151), wherein on the cross section parallel to and passing through the optical axis (X), the length of the cylindrical surface (151) is L; on a direction vertical to the optical axis (X), a width of the first platform surface (161) is W1, and the following condition is satisfied:

$$0.14 \leq L/W1 \leq 3.8.$$

7. The glass lens element of any of claims 1-6, further comprising:
a second platform surface (162) disposed relatively to the first platform surface (161), wherein the first platform surface (161) is parallel to the second platform surface (162), and a parallelism between the first platform surface (161) and the second platform surface (162) is not larger than 0.05 mm.

8. The glass lens element of any of claims 1-7, further comprising:
a frustum surface (180) disposed on a side of the brim surface (153) away from the cylindrical surface (151), the frustum surface (180) extends towards a direction away from the brim surface (153) and close to the optical axis (X), wherein on the cross section parallel to and passing through the optical axis (X), an angle between the frustum surface (180) and the cylindrical surface (151) is DOC, and the following condition is satisfied:

$$10 \text{ degrees} \leq DOC \leq 60 \text{ degrees.}$$

9. The glass lens element of any of claims 1-8, further comprising:
a low-reflecting surface (170) disposed on at least one of the cylindrical surface (151), the first arc surface (152) and the brim surface (153).

10. The glass lens element of any of claims 1-9, wherein on the cross section parallel to and passing through the optical axis (X), the length of the cylindrical surface (151) is L, and the following condition is satisfied:

$$0.03 \text{ mm} \leq L.$$

11. The glass lens element of any of claims 1-10, wherein on a cross section vertical to the optical axis (X) and passing through the cylindrical surface (151), a roundness of the cylindrical surface (151) is not larger than 00.05 mm.

12. An imaging lens assembly (11), **characterized in** comprising:

the glass lens element of any of claims 1-11;
at least one optical element disposed along the optical axis (X) of the glass lens element; and
a lens carrier (130), wherein the glass lens element and the at least one optical element are disposed on the lens carrier (130).

13. The imaging lens assembly (11) of claim 12, wherein the lens carrier (130) is directly contacted with the cylindrical surface (151) of the glass lens element, the lens carrier (130) comprises a brim surface corresponding structure (131), the brim surface corresponding structure (131) and the brim surface (153) of the glass lens element are relatively disposed, and a gap (G1) is formed between the brim surface (153) and the brim surface corresponding structure (131).

14. The imaging lens assembly (11) of any of claims 12-13, wherein the at least one optical element comprises a brim surface corresponding structure (132), the brim surface corresponding structure (132) and the brim surface (153) of the glass lens element are relatively disposed, and a gap (G2) is formed between the brim surface (153) and the brim surface corresponding structure (132).

15. The imaging lens assembly (11) of any of claims 12-14, wherein the glass lens element further comprises a first platform surface (161), one of the lens carrier (130) and the at least one optical element is directly contacted with the first platform surface (161), on a direction vertical to the optical axis (X), a width of the first platform surface (161) is W1, and the following condition is satisfied:

$$0.04 \text{ mm} \leq W1 \leq 1.7 \text{ mm.}$$

16. The imaging lens assembly (11) of any of claims 12-15, wherein the at least one optical element comprises an adjacent lens element, the glass lens element further comprises a frustum surface (180), the frustum surface (180) is directly contacted with the adjacent lens element, on the cross section parallel to and passing through the optical axis (X), an angle between the frustum surface (180) and the cylindrical surface (151) is DOC, and the following condition is satisfied:

$$10 \text{ degrees} \leq DOC \leq 60 \text{ degrees}.$$

17. An image capturing apparatus (10), **characterized in** comprising:
the imaging lens assembly (11) of any of claims 12-16.

18. An electronic device (70), **characterized in** comprising:
the image capturing apparatus (10) of claim 17.

19. A hybrid lens element, **characterized in** comprising:

a glass main body (311a) having an optical axis (X), and comprising:

an optical portion (340), the optical axis (X) passing through the optical portion (340); and
a peripheral portion (350) away from the optical axis (X) from the optical portion (340), and the peripheral portion (350) comprising:

a cylindrical surface (351) configured to define an outer diameter of the glass main body (311a), and the cylindrical surface (351) extending along a direction parallel to the optical axis (X);
a first arc surface (352) connected to the cylindrical surface (351), and the first arc surface (352) extending from the cylindrical surface (351) towards a direction close to the optical axis (X);
a brim surface (353) and the first arc surface (352) disposed relatively to the cylindrical surface (351), and the brim surface (353) extending and protruding from the cylindrical surface (351) towards a direction away from the first arc surface (352); and
a connecting surface (354) gradually close to the optical axis (X) from the first arc surface (352) towards a direction away from the brim surface (353), and the connecting surface (354) connected to the optical portion (340); and

a plastic frame (311b), comprising:

an outer annular portion (391) surrounding and adjacent to the cylindrical surface (351);
a first extending portion (392); and
a second extending portion (393), wherein the first extending portion (392) and the second extending portion (393) extend from the outer annular portion (391) towards two sides of the cylindrical surface (351) in a direction away from the outer annular portion (391), a first tip (394) and a second tip (395) are formed on a surface of the glass main body (311a), respectively, and the first tip (394) is closer to the optical axis (X) than the second tip (395) to the optical axis (X);

wherein on a cross section parallel to and passing through the optical axis (X), an angle of the first tip (394) is T1, and the following condition is satisfied:

$$5 \text{ degrees} \leq T1 \leq 121 \text{ degrees}.$$

20. The hybrid lens element of claim 19, wherein the plastic frame (311b) is made of opaque plastic material.

21. The hybrid lens element of any of claims 19-20, wherein on the cross section parallel to and passing through the optical axis (X), a radius of curvature of the first arc surface (352) is R, a length of the cylindrical surface (351) is L, and the following condition is satisfied:

$$0.11 \leq R/L \leq 6.65.$$

22. The hybrid lens element of any of claims 19-21, wherein on the cross section parallel to and passing through the optical axis (X), the radius of curvature of the first arc surface (352) is R, the length of the cylindrical surface (351) is L, and the following condition is satisfied:

$$0.23 \leq R/L \leq 3.3.$$

23. The hybrid lens element of any of claims 19-22, wherein the peripheral portion (350) further comprises an arc end (358) formed on a side of the brim surface (353) away from the first arc surface (352), a radius of curvature of the arc end (358) is Rp, and the following condition is satisfied:

$$0.01 \text{ mm} \leq Rp \leq 1.0 \text{ mm.}$$

24. The hybrid lens element of any of claims 19-23, wherein the radius of curvature of the arc end (358) is Rp, and the following condition is satisfied:

$$0.02 \text{ mm} \leq Rp \leq 0.5 \text{ mm.}$$

25. The hybrid lens element of any of claims 19-24, wherein the connecting surface (454) comprises a second arc surface (455) near to a side of the first arc surface (452) away from the cylindrical surface (451), the second arc surface (455) extends from the first arc surface (452) towards the direction close to the optical axis (X), and the plastic frame (411b) is simultaneously and directly contacted with the first arc surface (452) and the second arc surface (455);
wherein on the cross section parallel to and passing through the optical axis (X), a distance between a side of the first arc surface (452) close to the cylindrical surface (451) and a side of the second arc surface (455) away from the cylindrical surface (451) is C, and the following condition is satisfied:

$$0.05 \text{ mm} \leq C \leq 1.13 \text{ mm.}$$

26. The hybrid lens element of any of claims 19-25, wherein on the cross section parallel to and passing through the optical axis (X), the distance between the side of the first arc surface (452) close to the cylindrical surface (451) and the side of the second arc surface (455) away from the cylindrical surface (451) is C, and the following condition is satisfied:

$$0.1 \text{ mm} \leq C \leq 0.68 \text{ mm.}$$

27. The hybrid lens element of any of claims 19-26, wherein the connecting surface (454) further comprises a transition surface (456) smooth connected to the first arc surface (452) and the second arc surface (455).

28. The hybrid lens element of any of claims 19-27, wherein the plastic frame (311b) further comprises an intermediate surface (357) directly contacted with the glass main body (311a), on a direction vertical to the optical axis (X), a width of the intermediate surface (357) is Win, and the following condition is satisfied:

$$0.03 \text{ mm} \leq Win \leq 3.5 \text{ mm.}$$

29. The hybrid lens element of any of claims 19-28, wherein on the direction vertical to the optical axis (X), the width of the intermediate surface (357) is Win, and the following condition is satisfied:

$$0.06 \text{ mm} \leq Win \leq 1.7 \text{ mm.}$$

30. The hybrid lens element of any of claims 19-29, wherein the peripheral portion (350) further comprises a first platform surface (361) vertical to the cylindrical surface (351), the first platform surface (361) is disposed on a side corresponding to the second tip (395), and the first platform surface (361) is closer to the optical axis (X) than the second tip (395) to the optical axis (X);
wherein a distance between the first platform surface (361) and the second tip (395) on the direction parallel to the optical axis (X) is S, and the following condition is satisfied:

$$0.02 \text{ mm} \leq S \leq 0.15 \text{ mm}.$$

31. The hybrid lens element of any of claims 19-30, wherein the plastic frame (311b) further comprises a plastic platform surface (363), the plastic platform surface (363) is relative to the first platform surface (361), the first platform surface (361) is parallel to the plastic platform surface (363), and a parallelism between the first platform surface (361) and the plastic platform surface (363) is not larger than 0.05 mm.

32. The hybrid lens element of any of claims 19-31, further comprising:
an anti-reflecting layer (480) disposed on the glass main body (411a) and the plastic frame (411b).

33. An imaging lens assembly, **characterized in** comprising:

the hybrid lens element of any of claims 19-32;
at least one optical element disposed along the optical axis (X) of the glass main body (311a); and
a lens carrier (330), wherein the hybrid lens element and the at least one optical element are disposed on the lens carrier (330).

34. The imaging lens assembly of claim 33, wherein the plastic frame (411b) further comprises a disposing structure (472), and at least one of the at least one optical element and the lens carrier (430) is disposed on the disposing structure (472).

35. The imaging lens assembly of any of claims 33-34, wherein the at least one optical element comprises an adjacent lens element, the glass main body (311a) of the hybrid lens element comprises a frustum surface (371), the frustum surface (371) is directly contacted with the adjacent lens element, on the cross section parallel to and passing through the optical axis (X), an angle between the frustum surface (371) and the cylindrical surface (351) is DOC, and the following condition is satisfied:

$$10 \text{ degrees} \leq DOC \leq 60 \text{ degrees}.$$

36. The imaging lens assembly of any of claims 33-35, wherein the glass main body (311a) further comprises a first platform surface (361), one of the lens carrier (330) and the at least one optical element is directly contacted with the first platform surface (361), on a direction vertical to the optical axis (X), a width of the first platform surface (361) is W1, and the following condition is satisfied:

$$0.04 \text{ mm} \leq W1 \leq 1.7 \text{ mm}.$$

37. The imaging lens assembly of any of claims 33-36, wherein on the cross section parallel to and passing through the optical axis (X), the angle of the first tip (394) is T1, and the following condition is satisfied:

$$17 \text{ degrees} \leq T1 \leq 106 \text{ degrees}.$$

38. The imaging lens assembly of any of claims 33-37, wherein on the cross section parallel to and passing through the optical axis (X), an angle of the second tip (395) is T2, and the following condition is satisfied:

$$17 \text{ degrees} \leq T2 \leq 106 \text{ degrees}.$$

39. An image capturing apparatus (30), **characterized in** comprising:
the imaging lens assembly of any of claims 33-38.

40. An electronic device (70), **characterized in** comprising:

the image capturing apparatus (30) of claim 39.

Fig. 1A

Fig. 1B

EP 4 488 736 A1

Fig. 1C

Fig. 1D

Fig. 1E

EP 4 488 736 A1

Fig. 1F

Fig. 1G

EP 4 488 736 A1

20

211

X

22

23

230

Fig. 2A

Fig. 2B

EP 4 488 736 A1

Fig. 2C

21

226
223
214
217
213
225
222
216
212
224
221
215
211
230
X

Fig. 2D

Fig. 2E

Fig. 2F

EP 4 488 736 A1

Fig. 3A

Fig. 3B

30

326

325

324

323

322

X

311 { 311a
       311b

312

313

314

315

316

317  330

32

33

Fig. 3C

EP 4 488 736 A1

Fig. 3D

EP 4 488 736 A1

Fig. 3E

EP 4 488 736 A1

Fig. 3F

EP 4 488 736 A1

Fig. 4A

EP 4 488 736 A1

40

42

43

4C

X

430

411

412

413 414

415

416

417

418

Fig. 4B

Fig. 4C

Fig. 4D

EP 4 488 736 A1

41a

411a  411b
411

421

Fig. 4E

X

Fig. 4F

Fig. 4G

40

X

411 { 411a
411b

421
422
423
424
425
426
427
428
429

412
413
414
415
416
417
418
430

42
43

EP 4 488 736 A1

Fig. 4H

Fig. 4I

EP 4 488 736 A1

50

511

X

530

Fig. 5A

50

5C

53

530

X

511a

511b

511

512 513 514

515

516

Fig. 5B

EP 4 488 736 A1

Fig. 5C

EP 4 488 736 A1

Fig. 5D

Fig. 5E

51b

530

513

523

514

524

515

525

516

526

X

Fig. 5F

EP 4 488 736 A1

Fig. 5G

EP 4 488 736 A1

Fig. 5H

Fig. 5I

X

611

630

EP 4 488 736 A1

Fig. 6A

Fig. 6B

Fig. 6C

Fig. 6D

Fig. 6E

611

696  X  611a

611b

Fig. 6F

EP 4 488 736 A1

Fig. 6G

EP 4 488 736 A1

Fig. 6H

Fig. 7A

Fig. 7B

EP 4 488 736 A1

Fig. 8

EP 4 488 736 A1

91a

91b

90

Fig. 9

Fig. 10

EP 4 488 736 A1

Europäisches
Patentamt

European
Patent Office

Office européen
des brevets

# EUROPEAN SEARCH REPORT

**Application Number**

EP 24 18 4767

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2001/053032 A1 (HATAKEYAMA SHIGERU [JP] ET AL) 20 December 2001 (2001-12-20) | 1-4,6-8, 10-18 | INV. G02B7/02 |
| Y | * paragraphs [0001] - [0042]; figures 2,5 * | 5,9 | |
| X | US 2021/006695 A1 (MIYASAKA KOJI [JP] ET AL) 7 January 2021 (2021-01-07) * paragraphs [0001] - [0075]; figures 1-3 * | 1-3 | |
| Y | US 2019/179126 A1 (KIM JAE HYUN [KR] ET AL) 13 June 2019 (2019-06-13) * figures 3,4 * | 5,9 | |
| A | CN 114 647 133 A (NINGBO SHUISU PHOTOELECTRIC INFORMATION LTD COMPANY) 21 June 2022 (2022-06-21) * figures 1-4 * | 19-40 | |

**TECHNICAL FIELDS SEARCHED (IPC)**

G02B
C03B

The present search report has been drawn up for all claims

| Place of search | Date of completion of the search | Examiner |
|---|---|---|
| Munich | 27 November 2024 | Baur, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................
& : member of the same patent family, corresponding document

EPO FORM 1503 03.82 (P04C01)

2

## ANNEX TO THE EUROPEAN SEARCH REPORT
## ON EUROPEAN PATENT APPLICATION NO.

EP 24 18 4767

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2024

| Patent document cited in search report | Publication date | Patent family member(s) | Publication date |
|---|---|---|---|
| US 2001053032 A1 | 20-12-2001 | CN 1330278 A | 09-01-2002 |
| | | JP 3733004 B2 | 11-01-2006 |
| | | JP 2002006189 A | 09-01-2002 |
| | | US 2001053032 A1 | 20-12-2001 |
| US 2021006695 A1 | 07-01-2021 | CN 111902740 A | 06-11-2020 |
| | | JP 2023026594 A | 24-02-2023 |
| | | JP WO2019189919 A1 | 25-03-2021 |
| | | US 2021006695 A1 | 07-01-2021 |
| | | WO 2019189919 A1 | 03-10-2019 |
| US 2019179126 A1 | 13-06-2019 | CN 109917501 A | 21-06-2019 |
| | | CN 209690551 U | 26-11-2019 |
| | | KR 20190070121 A | 20-06-2019 |
| | | US 2019179126 A1 | 13-06-2019 |
| CN 114647133 A | 21-06-2022 | NONE | |

EPO FORM P0459

For more details about this annex : see Official Journal of the European Patent Office, No. 12/82